# EUROPÄISCHE PATENTSCHRIFT

(11) **EP 4 519 118 B1**
(45) Veröffentlichungstag und Bekanntmachung des Hinweises auf die Patenterteilung: **26.08.2026**
(21) Anmeldenummer: 23738420.1
(22) Anmeldetag: 20.06.2023
(51) Int. Cl.: B60L 53/64, H02J 3/14, H02J 7/00

(54) **VERFAHREN UND STEUERUNGSANORDNUNG ZUR EINSCHALT- ODER LADESTEUERUNG VON ENERGIEENDVERBRAUCHENDEN ELEKTROGERÄTEN UND/ODER ELEKTROFAHRZEUGEN SOWIE ELEKTROGERÄT UND ELEKTROFAHRZEUG**
METHOD AND CONTROL ARRANGEMENT FOR MANAGING THE ACTIVATION OR CHARGING OF POWER-CONSUMING ELECTRIC APPLIANCES AND / OR ELECTRIC VEHICLES AND ELECTRIC APPLIANCE AND ELECTRIC VEHICLE
PROCÉDÉ ET DISPOSITIF DE COMMANDE DESTINÉS À LA COMMANDE D'ALLUMAGE OU DE CHARGE DES APPAREILS ÉLECTRIQUES CONSOMMATEURS FINAUX D'ÉNERGIE ET/OU DES VÉHICULES ÉLECTRIQUES, AINSI QU'APPAREIL ÉLECTRIQUE ET VÉHICULE ÉLECTRIQUE

(30) Priorität: 24.06.2022 EP 22180953
(43) Veröffentlichungstag der Anmeldung: 12.03.2025
(73) Patentinhaber: Siemens Aktiengesellschaft, 80333 München (DE)
(72) Erfinder: REGNAT, Nikolaus, 81827 München (DE); REITZER, Guillaume, 68390 Sausheim (FR); TELSCHIG, Kilian, 81543 München (DE); WAND, Johannes, 37077 Göttingen (DE); WEISS, Johannes, 96170 Lisberg (DE)
(74) Vertreter: Siemens Patent Attorneys
(86) Internationale Anmeldenummer: PCT/EP2023/066542
(87) Internationale Veröffentlichungsnummer: WO 2023/247477

(56) Entgegenhaltungen:
- WO-A1-2018/046354
- WO-A1-2021/108745
- WO-A2-2011/156776
- DE-A1- 102019 215 609
- US-A1- 2011 125 337
- US-A1- 2021 203 177

## Beschreibung

Die Erfindung bezieht sich auf ein Verfahren zur Einschalt-oder Ladesteuerung von energieendverbrauchenden Elektrogeräten und/oder Elektrofahrzeugen gemäß Patentanspruch 1, eine Steuerungsanordnung zur Einschalt-oder Ladesteuerung von energieendverbrauchenden Elektrogeräten und/oder Elektrofahrzeugen gemäß Patentanspruch 8, ein Elektrogerät gemäß Patentanspruch 15 sowie ein Elektrofahrzeug Patentanspruch 17.

Gattungsgemäßer Stand der Technik ist offenbart in WO2011/156776A2, DE102019215609Al, US2011/125337Al, WO2018/046354Al, WO2021/108745Al, US2021/203177Al.

Die Bereitstellung elektrischer Energie wurde in der Vergangenheit vorrangig durch Kohle-,Gas- und/oder Atomkraftwerke sichergestellt, die sich gut auf einen benötigten Energiebedarf regeln lassen. Aktuell ist bereits ein großer Teil der elektrischen Energieerzeugung auf erneuerbare Energien durch Solaranlagen und Windkraftanlagen abgedeckt. Schon heute gibt es Erzeugungsspitzen, z.B. bei viel Wind und gleichzeitig viel Sonne. Deshalb werden Windkraftanlagen "aus dem Wind gedreht". Zukünftig wird der Anteil der erneuerbaren Energien jedoch noch weiter steigen (Stw.: Klimawandel, Digitalisierung, Elektromobilität, etc.).

Auf der anderen Seite werden als Energieverbraucher immer mehr und mehr Elektro-Massenprodukte, wie Elektrogeräte und/oder Elektrofahrzeuge, verwendet.

Die Elektrogeräte können batteriebetriebene Geräte mit einem ladbaren Akku, wie z.B. ein Notebook, ein Tablet, Smart-Geräte, wie Smart-Telefone, Smart-Lautsprecher, Smart-Uhren, Funksteckdosen, Smart-Hausgeräte, Standby-Funktionen, etc. oder direkt am Niederspannungsnetz betreibbare Haushaltsgerät, wie z.B. ein Fernseher, eine Waschmaschine, eine Geschirrspülmaschine oder ein Elektroherd etc., sein.

Bei beiden Typen von Elektrogeräten mach benötigt jedes einzelne Gerät für sich sehr wenig Energie, allerdings in Summe über alle auf dem Markt verfügbaren Geräte kann dieser Energiebedarf doch einen großen Anteil ausmachen. Zudem verfügen die batteriebetriebenen Elektrogeräte eine Batterie oder Akku, um auch bei Abwesenheit eines Niederspannungsnetzanschlusses weiter zu funktionieren.

Die Elektrofahrzeuge sind im Niederspannungsbereich, insbesondere Elektroautos, die an Ladestationen ihre verbauten Energiespeicher, z.B. große Ladebatterien oder Lade-Akkus in bekannter Weise aufladen. Auch hier benötigt jedes einzelne Elektrofahrzeug für einen Ladevorgang verhältnismäßig wenig Energie, aber in der Summe aller zum Einsatz kommenden Elektrofahrzeuge und diese Anzahl wird vor dem Hintergrund des Klimawandels eher zunehmen denn abnehmen wird der Energiebedarf auf diesem Gebiet einen noch gewaltigeren Anteil ausmachen als bei den vorstehend genannten Elektrogeräten.

In diesem Spannungsfeld zwischen Erzeugungsspitzen erneuerbarer Energien einerseits und Energiebedarfe von Elektro-Massenprodukten (u.a. Elektrogeräte und/oder Elektrofahrzeuge) bei geringem Energiebedarf des einzelnen Elektroproduktes andererseits stellt es sich die Frage, ob es erreicht werden kann, dass jene genannten Elektro-Massenprodukte genau dann für einen Produktbetrieb eingeschaltet und/oder aufgeladen werden, wenn gerade eben sowieso zu Energie im Energienetz vorhanden ist?

Bislang ist keine Lösung bekannt, die für solche Elektromassenprodukte in der breiten Masse funktioniert.

Einzelne Lösungen existieren, so z.B. eine Lösung, bei der das Aufladen eines Elektroautos aus der Ferne gesteuert wird und nur dann zugelassen wird, wenn gerade zu viel Strom im Netz vorhanden ist. Aber eine gezielte zweckgerichtete Einschalt- oder Ladesteuerung von energieendverbrauchenden Elektro-Massenprodukten, wie Elektrogeräten und/oder Elektrofahrzeugen

Die der Erfindung zugrundeliegende Aufgabe besteht darin, ein Verfahren und eine Steuerungsanordnung zur Einschalt- oder Ladesteuerung von energieendverbrauchenden Elektrogeräten und/oder Elektrofahrzeugen anzugeben, bei dem ein Elektrogerät/Elektrofahrzeug an einer Energieverbrauchsstelle, an dem das Elektrogerät/Elektrofahrzeug durch Einschalten in einen Betriebszustand oder durch Laden einer Batterie, z.B. eines Akkus, elektrische Energie verbraucht, zum Zweck einer Energiekostenoptimierung des Energieverbrauchs unter Identifikation der Energieverbrauchsstelle für eine temporäre Betriebsdauer oder Ladedauer zweckgebunden steuerbar ist.

Diese Aufgabe wird ausgehend von dem im Oberbegriff des Patentanspruchs 1 definierten Verfahren durch die im Kennzeichen des Patentanspruches 1 angegebenen Merkmale gelöst.

Darüber hinaus wird diese Aufgabe ausgehend von der im Oberbegriff des Patentanspruchs 8 definierten Steuerungsanordnung durch die im Kennzeichen des Patentanspruches 8 angegebenen Merkmale gelöst.

Weiterhin wird diese Aufgabe ausgehend von der im Oberbegriff des Patentanspruchs 15 definierten Elektrogerät durch die im Kennzeichen des Patentanspruches 15 angegebenen Merkmale gelöst.

Außerdem wird diese Aufgabe ausgehend von der im Oberbegriff des Patentanspruchs 17 definierten Elektrofahrzeug durch die im Kennzeichen des Patentanspruches 17 angegebenen Merkmale gelöst.

Die der Erfindung gemäß den unabhängigen Patentansprüchen 1, 8, 15 und 17 zugrundeliegende Idee besteht darin, dass zur Einschalt- oder Ladesteuerung eines Elektrogeräts oder zur Ladesteuerung eines Elektrofahrzeugs von einem Energieendverbraucher, das jeweils via einem Netzteil an ein Niederspannungsnetz mit einem Energieverbrauchszähler, in das ein Modulationssignal modulierbar ist, über eine Netzanschlussstelle anschließbar ist,
a. eine eindeutig kodierte Verbraucherstellenidentifikationskennung als Signalinformation des Modulationssignals auf einer Niederspannungsnetzteilstrecke zwischen dem Energieverbrauchszähler und der Netzanschlussstelle erzeugt wird,
b. die eindeutige Kodierung der in dem Modulationssignals enthaltenen Verbraucherstellenidentifikationskennung durch das Netzteil erkannt wird,
c. die Verbraucherstellenidentifikationskennung an eine Steuereinheit des Elektrogeräts oder des Elektrofahrzeugs weitergegeben wird,
d. von der Steuereinheit mit einer durch die Weitergabe der Verbraucherstellenidentifikationskennung ausgelösten Berechtigungsanfrage für entweder eine Freigabe zum Einschalten oder Freigabe zum Laden des Elektrogeräts oder eine Freigabe zum Laden des Elektrofahrzeugs die Nutzung eines von einem Serviceanbieter mit einem Serviceanbieter-Server angebotenen Service zur Optimierung von Energiekosten von Elektrogeräten/Elektrofahrzeugen angefragt wird, wobei der Serviceanbieter-Server über ein "Application Programming Interface <API>"-Modul der Steuereinheit mit dem Elektrogerät oder dem Elektrofahrzeug als Client durch eine logische Kommunikationsverbindung im Sinne eines Client-Server-Prinzips verbindbar ist, und die Verbraucherstellenidentifikationskennung an den Serviceanbieter-Server übergeben wird,
**e.** von dem Serviceanbieter-Server des Serviceanbieters mit der Einschaltfreigabe bzw. der Ladefreigabe innerhalb eines Zeitfensters geantwortet wird, wenn die Energiekostenoptimierung aufgrund eines Energielieferkontrakts zwischen dem Serviceanbieter und einem Energieanbieter gegeben ist, worauf das Elektrogerät zu kontraktbezogenen Energielieferungskonditionen für die Energiekostenoptimierung des Elektrogeräts automatisch eingeschaltet bzw. geladen oder das Elektrofahrzeug zu kontraktbezogenen Energielieferungskonditionen für die Energiekostenoptimierung des Elektrofahrzeugs geladen wird, f. anderenfalls, wenn die Einschaltfreigabe bzw. die Ladefreigabe in dem Zeitfenster unterbleibt, wird das Elektrogerät ohne die besagte Energiekostenoptimierung in herkömmlicher Weise manuell eingeschaltet bzw. in herkömmlicher Weise geladen, oder das Elektrofahrzeug ohne die besagte Energiekostenoptimierung in herkömmlicher Weise geladen.

Eine vorteilhafte Weiterbildung der Erfindung gemäß der Ansprüche 2, 9, 16 und 18 besteht darin, dass mit der in Bezug auf die übergebene Verbraucherstellenidentifikationskennung erfolgten Einschaltfreigabe und dem daraufhin geschehenen automatischen Einschalten des Elektrogeräts bzw. der erfolgten Ladefreigabe und dem daraufhin geschehenen Laden des Elektrogeräts oder Elektrofahrzeugs
1. ein dazu korrespondierender Energieverbrauch des Elektrogeräts bzw. des Elektrofahrzeugs erfasst,
2. der jeweilige Energieverbrauch via dem Serviceanbieter dem Energieanbieter mitgeteilt und
3. der Energieendverbraucher von dem Energieanbieter für den jeweils mitgeteilten Energieverbrauch gemäß der kontraktbezogenen Energiekostenoptimierung durch Erhalt eines Energiekostenrabatts rabattiert werden.

Auf diese Art und Weise kann der Serviceanbieter, der z.B. gemäß den Ansprüchen 7 und 14 ein Hersteller des Elektrogeräts bzw. Elektrofahrzeugs und der Serviceanbieter-Server ein Server des Elektrogerätherstellers bzw. Elektrofahrzeugherstellers sind, einen Energieverbrauch quasi gleich mit dem Verkauf des Elektrogeräts bzw. des Elektrofahrzeugs mitverkaufen, so dass der Energieendverbraucher und Käufer des Elektrogeräts bzw. des Elektrofahrzeugs dafür nicht mehr aufkommen müssen. Der Aspekt, dass Energieverbrauchskosten des Elektrogeräts bzw. des Elektrofahrzeugs vom Serviceanbieter, bzw. Hersteller des Elektrogeräts bzw. Elektrofahrzeugs übernommen werden können, ist in dem die Erfindung betreffenden Kontext ein interessanter, unbekannter Ansatz.

Ein vom Prinzip her vergleichbaren Service gibt es auf einem anderen Gebiet, dem Büchermarkt, wo ein Serviceanbieter, wie die Firma Amazon^{™}, es für Tablets der Firma Kindle^{™} ermöglicht, das Bücher über ein Mobilfunknetz nachgeladen werden können, ohne dass sich ein Buch-Endkunde um einen Mobilfunkvertrag kümmern oder gar an ein Datenvolumen denken muss, weil dies von dem Serviceanbieter, wie Amazon^{™}, für den Endkunden geregelt wird.

Weiterhin ist von Vorteil, wenn das Modulationssignals gemäßen Ansprüchen 3 und 10 in regelmäßigen Zeitabständen erzeugt wird. Dadurch kann zu jedem beliebigen Zeitpunkt flexibel im Hinblick auf das Spannungsfeld zwischen den Erzeugungsspitzen erneuerbarer Energien und den Energiebedarfen von Elektro-Massenprodukten bei kontraktbezogenen Energielieferungskonditionen für die Energiekostenoptimierung Elektrogeräts bzw. des Elektrofahrzeugs reagiert werden.

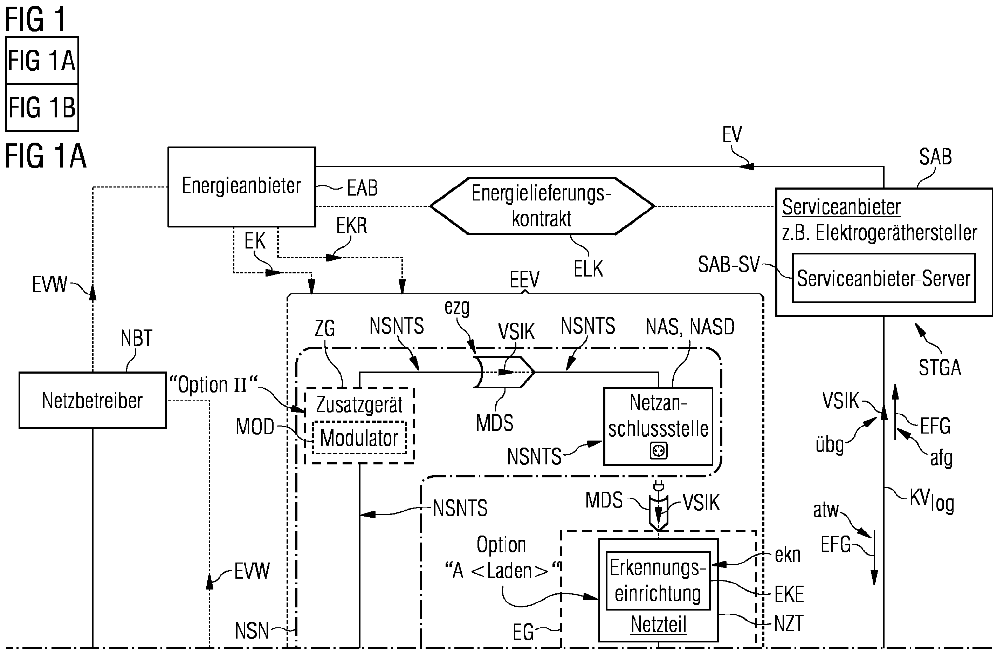

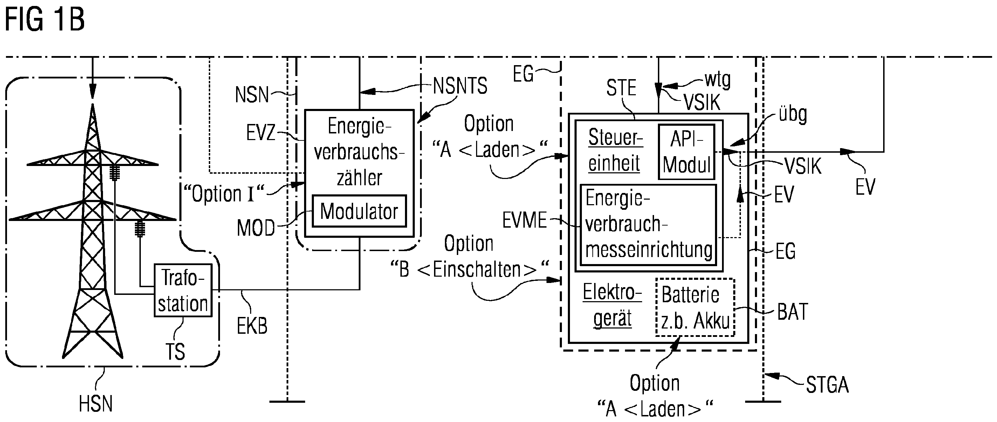

Darüber hinaus zeichnet sich die Erfindung in vorteilhafter Weise im Hinblick auf das Spannungsfeld zwischen den Erzeugungsspitzen erneuerbarer Energien und den Energiebedarfen von Elektro-Massenprodukten dadurch aus, das
- gemäß den Ansprüchen 4 und 11 das Elektrogerät mit dem, dem Elektrogerät zugeordneten, Netzteil ein batteriebetriebenes Gerät (vgl. Option "A <Laden>" in FIGUR 1), z.B. ein Notebook, ein Tablet oder ein Smartphone etc., ist und das Netzteil zum Laden einer Batterie, z.B. einem Akku, des batteriebetriebenen Gerät als separates Ladegerät benutzt wird, das für das Laden an eine Netzanschlusssteckdose als die Netzanschlussstelle anschließbar ist (vgl. Option "A <Laden>" in FIGUR 1),
- gemäß den Ansprüchen 5 und 12 das Elektrogerät mit dem in dem Elektrogerät angeordneten Netzteil ein Haushaltsgerät (vgl. Option "B <Einschalten>" in FIGUR 1), z.B. ein Fernseher, eine Waschmaschine, eine Geschirrspülmaschine oder ein Elektroherd etc., ist und das Haushaltsgerät an eine Netzanschlusssteckdose als die Netzanschlussstelle anschließbar ist (vgl. Option "B <Einschalten>" in FIGUR 1),
- gemäß den Ansprüchen 6 und 13 das Elektrofahrzeug mit dem in dem Elektrofahrzeug angeordneten Netzteil ein Elektroauto ist und das Elektroauto über das Netzteil zum Laden einer Ladebatterie, z.B. ein Lade-Akku, an eine Ladestation als die Netzanschlussstelle anschließbar ist.

Die der Erfindung zugrundeliegende prinzipielle Szenario soll stellvertretend für alle Elektrogeräte und Elektrofahrzeuge nachfolgend anhand des Elektrogeräts und dem, dem Elektrogerät zugeordneten, Netzteil, wobei das Elektrogerät z.B. ein Smartphone (smartes Endgerät) mit einem Akku ist und das Netzteil zum Laden des Akkus an die Netzanschlusssteckdose als die Netzanschlussstelle anschließbar ist, skizziert werden.

Ausgangspunkt für die zu skizzierende Szenario ist dabei das Verständnis, wie bislang Energiekosten verrechnet werden. Ein Netzbetreiber installiert in einem Niederspannungsnetz einer Energieverbrauchsstelle mit Energieabnahmepunkt für einen Energieendverbraucher einen Energieverbrauchszähler. Der Energieendverbraucher hat einen Energieversorgungsvertrag mit einem Energieanbieter und teilt den entsprechenden Energieverbrauchszähler am Energieabnahmepunkt mit. Der "Energieverbrauch" des Endverbrauchers wird vom Energieverbrauchszähler festgestellt. Dieser muss regelmäßig an den Energieanbieter übermittelt werden und auf Basis dessen muss der Energieendverbraucher die bezogenen Energie bezahlen.

Die Skizzierung des Szenario umfasst folgendes:
1. In einem Bereich des Niederspannungsnetz der Energieverbrauchsstelle nach oder hinter dem Energieabnahmepunkt für den Energieendverbraucher wird auf Niederspannungsnetzteilstrecke zwischen dem Energieverbrauchszähler und der Netzanschlusssteckdose eine Modulation aufgebracht, die eine eindeutige kodierte Kennung, mit oder anhand der die Energieverbrauchsstelle eindeutig identifizierbar ist und deshalb eine Verbraucherstellenidentifikationskennung ist, in das Niederspannungsnetz der Energieverbrauchsstelle einspeist.
2. Das Netzteil des Smartphone ist in der Lage die eindeutige kodierte Verbraucherstellenidentifikationskennung aus dem das Niederspannungsnetz der Energieverbrauchsstelle zu erkennen, indem diese z.B. ausgelesen wird.
3. Das Netzteil gibt die erkannte oder gelesene Verbraucherstellenidentifikationskennung an das Smartphone weiter.
4. Das Smartphone fragt bei einem Server eines Serviceanbieters, z.B. dem Hersteller des Smartphone und/oder einem anderen Anbieter, an, ob es einen Ladevorgang zum Aufladen des Akkus starten kann und übergibt dabei die eindeutige Verbraucherstellenidentifikationskennung an den Server.
5. Wird ein Ladevorgang gestartet erfasst das smarte Endgerät die aufgenommene Energie und berichtet dies an den Serviceanbieter bzw. Hersteller.
6. Der Serviceanbieter bzw. Hersteller hat einen entsprechenden Energielieferkontrakt oder auch mehrere mit einem Energieanbieter, um immer dann Energie vom Energieanbieter zu beziehen, wenn zu viel Energie im Netz vorhanden ist. Für den Bezug oder die Abnahme dieser überschüssigen Energie wird der Serviceanbieter bzw. Hersteller vom Energieanbieter entsprechend mit einem günstigeren Energiepreis für diese Abnahme vergütet.
**7.** Der Hersteller/Anbieter meldet an den Energieanbieter (z.B. direkt oder über einem Netzbetreiber), für welche Kerbraucherstellenidentifikationskennung wie viel Kosten der bezogenen oder abgenommenen elektrischen Energie übernommen wird.
**8.** Der Energieanbieter rabattiert den Energieendverbraucher entsprechend; zwar wird der Verbrauch für das Laden des Smartphone am Energieverbrauchszähler mitgerechnet, allerdings bekommt der Energieendverbraucher den Verbrauch als Rabatt wieder gutgeschrieben.

Die an dem skizzierten Szenario beteiligten Komponenten oder Stellen sind:

### A. Modulator

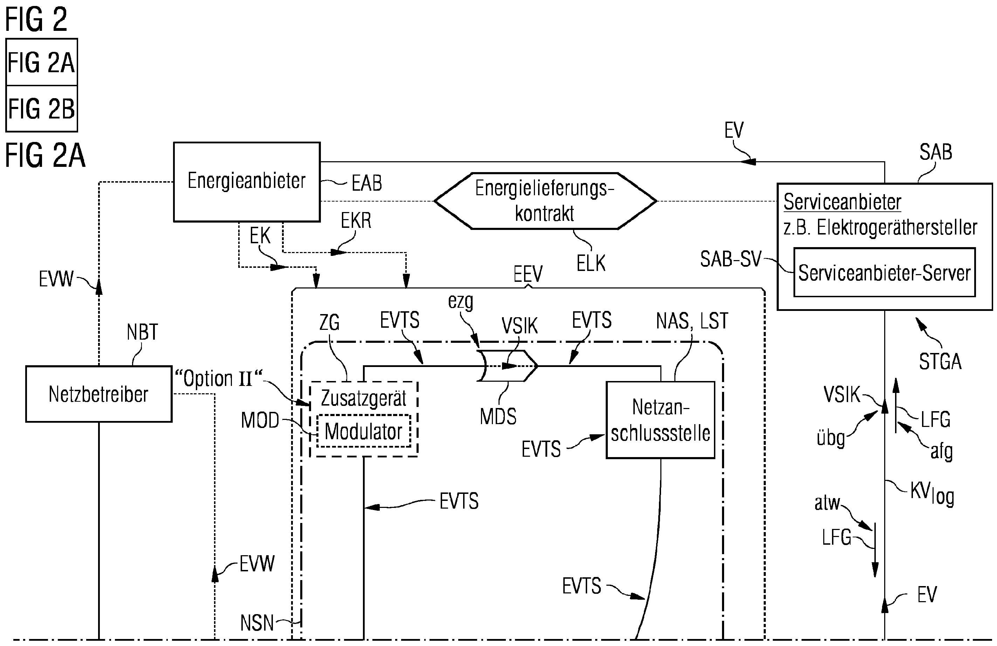

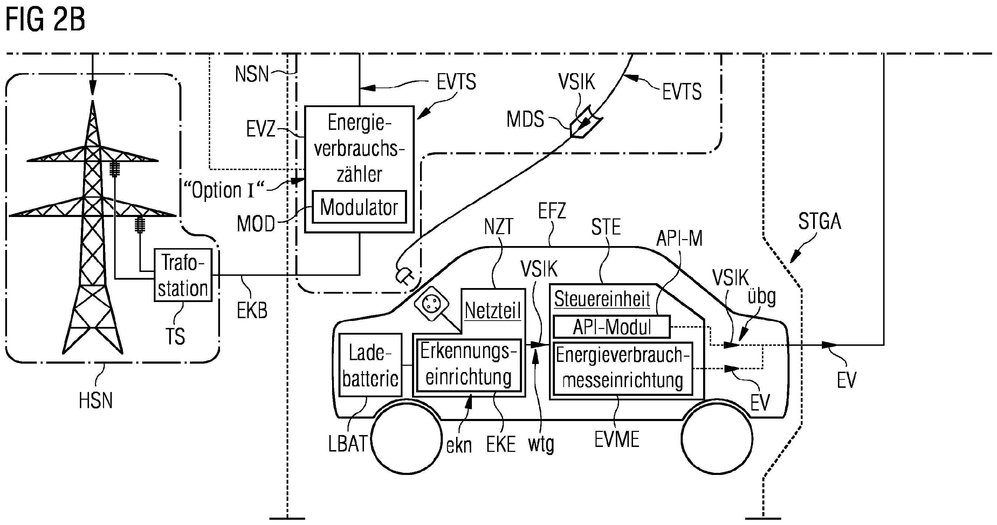

Der Modulator ist z.B. vorzugsweise entweder eine Funktion des Energieverbrauchszählers ("Option I" in FIGUREN 1 und 2), d.h. in diesem Fall muss der Energieverbrauchszähler mit dieser Funktion ausgestattet sein, oder eines Zusatzgeräts ("Option II" in FIGUREN 1 und 2), was nach dem Energieverbrauchszähler installiert wird. Der Modulator moduliert eine eindeutig Kennung als elektromagnetisches Signal in das Niederspannungsnetz der Energieverbrauchsstelle. Dies geschieht über eine Festlegung der entsprechenden Frequenz (bspw. 100 kHz) und einer Beschreibung (Protokoll) zur Kodierung der Kennung, z.B. eine Präambel und danach eine UTF-8 <UCS (Universal Coded Character Set) Transformation Format> kodierte Binärfolge von 64 Zeichen.

Der Modulator benötigt zum Modulieren dieses Signals selbst geringfügig Energie. Diese bezieht er über die Ausbeute der Interferenz durch den elektrischen Leiter, in dessen Nähe der Modulator installiert wird. Das Signal selbst wird ebenfalls wieder über Interferenz auf den elektrischen Leiter aufmoduliert (Magnetfeld). Der Modulator wiederholt in festgelegten Abständen das Senden der Kennung ins Niederspannungsnetz der Energieverbrauchsstelle, z.B. jede Minute.

### B. Netzteil

Das Netzteil des Smartphone beinhaltet eine Funktion, um die eindeutige Kodierung der Kennung aus dem Niederspannungsnetz der Energieverbrauchsstelle zu erkennen, so z.B. über eine festgelegte Frequenz von beispielsweise 100 kHz. Nach dem Erkennen kann die eindeutige Kennung über eine USB-Schnittstelle zum Smartphone weitergegeben werden. Darüber hinaus kann das Smartphone das Netzteil anweisen, ob ein Ladevorgang gestartet werden soll oder nicht.

Das Netzteil braucht für das Erkennen der eindeutigen kodierten Kennung ebenfalls geringfügig Energie. Wird das Netzteil über die Netzanschlusssteckdose mit dem Niederspannungsnetz der Energieverbrauchsstelle verbunden, so ist es so lange aktiv und sucht nach der eindeutigen Kennung, bis es die Kennung erkannt hat oder es gibt nach einer gewissen Zeit auf, z.B. 5 Minuten. Ist die Kennung jedoch erkannt worden, so wird diese in einem persistenten Speicher persistiert. Das Netzteil legt sich nach dem Erkennen oder der Aufgabe für das Erkennen "schlafen", bis es über das Smartphone über die USB-Schnittstelle "geweckt" wird.

### C. Smartphone

Das Smartphone kann die eindeutige Kennung vom Netzteil lesen und implementiert eine Funktion über ein "Application Programming Interface <API>"-Modul, um mit dem Server des Serviceanbieters bzw. Herstellers zu kommunizieren. Über das "Application Programming Interface <API>"-Modul fragt das Smartphone beim Server an, wann ein Ladevorgang gestartet werden kann, und übergibt die eindeutige Kennung an den Server des Serviceanbieters bzw. Herstellers.

Ziel ist es den Akku des Smartphone immer dann aufzuladen, wenn zu viel Energie durch erneuerbare Energien im Netz ist.

Die Kontrolle dafür liegt beim Serviceanbieter bzw. Hersteller.

Tritt der Fall ein, dass sich der Akku des Smartphone leert, ohne dass eine Ladefreigabe des Serviceanbieters bzw. Herstellers vorliegt, löst das Smartphone selbst den Ladevorgang über das Netzteil aus.

Die im Smartphone aufgenommene Energie wird gemessen und an den Serviceanbieter bzw. Hersteller übermittelt.

### D. Serviceanbieter bzw. Hersteller

Der Serviceanbieter oder der Hersteller des Smartphone kann damit Werbung machen, dass das Smartphone im Betrieb keine Kosten verursacht. Als Voraussetzung dafür ist nur die Infrastruktur mit dem Modulator notwendig. Am Anfang verursacht die Installation jener Modulatoren Zusatzaufwand.

Einmal installiert, können diese jedoch vielseitig verwendet werden - es ist in diesem Sinne ein gewisses Anfangsinvestment des Serviceanbieters bzw. Herstellers. Ziel des Serviceanbieters bzw. Herstellers ist es die Smartphones nur dann zum Ladevorgang anzuweisen, wenn genug Energie im Netz vorhanden ist. Dazu bietet der Serviceanbieter bzw. Hersteller negative Regelleistung an, d.h. der Serviceanbieter bzw. Hersteller bekommt Geld dafür, dass er im Bedarfsfall überschüssige, im Energienetz vorhandene Energie abnimmt. Im Bedarfsfall selbst bekommt der Serviceanbieter bzw. Hersteller die bezogene Energie kostenlos und weist die die Smartphones an den Ladevorgang zu starten.

Der Serviceanbieter bzw. Hersteller meldet entweder direkt dem Energieanbieter oder via dem Netzbetreiber dem Energieanbieter, und zwar anhand der eindeutigen Kennung, welche Energieverbrauchsstelle mit dem Energieabnahmepunkt für den Energieendverbraucher in dem Niederspannungsnetz wie viel Energie auf die für das Szenario beschriebene Art und Weise "verbraucht" hat. Die Kosten dieses Verbrauchs werden vom Serviceanbieter bzw. Hersteller übernommen. Im Idealfall ist das ein Nullsummenspiel für die bereitgestellte negative Regelungsleistung.

### E. Energieanbieter/Netzbetreiber

Der Energieanbieter/Netzbetreiber sind in Wirklichkeit zwei verschiedene, voneinander zu trennende Instanzen, die sich für das vorstehend skizzierte Szenario abstimmen müssen. Zur Vereinfachung werden sie jedoch zusammen genannt. Sie bieten ebenfalls ein "Application Programming Interface <API>"-Modul an, über das sich der Serviceanbieter bzw. Hersteller beim Energieanbieter/Netzbetreiber anmelden und anzeigen können, wie viel der Energiekosten an der Energieverbrauchsstelle übernommen werden soll. Jene Kosten verrechnet der Energieanbieter/Netzbetreiber an den Serviceanbieter bzw. Hersteller und erfasst für den Energieendverbraucher einen entsprechenden Rabatt.

Der Energieanbieter/Netzbetreiber hat ein Interesse jenes "Application Programming Interface <API>"-Modul für den Serviceanbieter bzw. Hersteller bereit zu stellen, weil er dadurch:
- Den Anteil der erneuerbaren Energien dadurch hoch halten kann und jene Erzeugung nicht "heraus nehmen" muss.
- Der Umsatz von elektrischer Energie bleibt konstant.
- Die Realisierung der Energienetzstabilität wird von anderen Partnern im Energienetz übernommen

Das vorstehend skizzierte Szenario lässt sich in Bezug auf das Laden von Akkus auch für die Elektrofahrzeuge anwenden. Darüber hinaus ist das vorstehend skizzierte Szenario auch in Bezug auf das Einschalten von Elektrogeräten ohne Akku anwendbar, wobei dann statt des Ladens dann das Einschalten angefragt und freigegeben werden muss.

Die so Szenario-skizzierte Idee der Erfindung und damit die Erfindung bietet den Vorteil, dass
**1.** das Smartphone sich einerseits identifizieren kann und anderseits ein konkretes Mapping des Energieverbrauchs auf der Basis eines Energielieferkontrakts mit dem Energieanbieter vorgenommen werden kann.
2. die Möglichkeit für den Serviceanbieter oder den Hersteller des Smartphone besteht, Energiekosten zu übernehmen. Auf diese Art und Weise kann der Serviceanbieter bzw. Hersteller am Ende vielleicht sogar noch Geld verdienen.

Weitere Vorteile der Erfindung ergeben sich aus der nachfolgenden Beschreibung eines Ausführungsbeispiels der Erfindung anhand von FIGUREN 1 und 2. Diese zeigen:
FIGUR 1 eine Steuerungsanordnung zur Einschalt- oder Ladesteuerung von energieendverbrauchenden Elektrogeräten,
FIGUR 2 eine Steuerungsanordnung zur Ladesteuerung von energieendverbrauchenden Elektrofahrzeugen.

FIGUR 1 zeigt eine Steuerungsanordnung STGA zur Einschalt-oder Ladesteuerung von energieendverbrauchenden Elektrogeräten mit einem Elektrogerät EG eines Energieendverbrauchers EEV, der in einem Niederspannungsnetz NSN eine Energieverbrauchsstelle mit Energieabnahmepunkt bildet.

Das Niederspannungsnetz NSN ist über ein Erdkabel EKB mit einer Trafostation TS eines Hochspannungsnetz HSN verbunden. Das Hochspannungsnetz HSN wird von einem Netzbetreiber NBT betrieben, der seinerseits mit einem Energieanbieter EAB gekoppelt ist. In dem Niederspannungsnetz NSN ist zur Bildung der Energieverbrauchsstelle auf einer Niederspannungsnetzteilstrecke NSNTS ein Energieverbrauchszähler EVZ und eine Netzanschlussstelle NAS angeordnet. Der Energieverbrauchszähler EVZ erfasst die von dem Energieendverbrauchers EEV verbraucht Energie und erzeugt daraus Energieverbrauchswerte EVW, die über den Netzbetreiben NBT dem Energieanbieter EAB in Zuge einer PULL- oder PUSH-Mechanismus zur Verfügung gestellt werden. Aus den zur Verfügung gestellten Energieverbrauchswerte EVW werden von dem Energieanbieter EAB auf der Basis eines Energieversorgungsvertrages zwischen dem Energieanbieter EAB und dem Energieendverbraucher EEV Energiekosten EK für den vom Energieverbrauchszähler EVZ erfassten Energieverbrauch ermittelt und dem Energieendverbraucher EEV mitgeteilt.

Das Elektrogerät EG des Energieendverbrauchers ist mit einem Netzteil NZT, das entweder - als Ausprägungsvariante 1 - dem Elektrogerät EG als separates Gerät zugeordnet ist oder - als Ausprägungsvariante 2 - Bestandteil des Elektrogeräts EG ist und in diesem angeordnet ist, zur Stromversorgung an das Niederspannungsnetz NSN über die Netzanschlussstelle NAS anschließbar. Die Netzanschlussstelle NAS ist in diesem Fall z.B. eine Netzanschlusssteckdose NASD.

In der Ausprägungsvariante 1 ist das Elektrogerät EG ein batteriebetriebenes Gerät und weist dementsprechend eine Batterie BAT, z.B. in der Form eines Akkus, auf. Das in diesem Fall als separates Gerät dem batteriebetriebenen Elektrogerät EG zugeordnete Netzteil NZT dient zum Laden der Batterie BAT (Option "A <Laden>"). Das batteriebetriebene Elektrogerät EG ist vorzugsweise ein Notebook, ein Tablet oder ein Smartphone, es kann aber auch jedes andere batterie- bzw. akkubetriebene Gerät sein, das für das Laden über das als separates Gerät ausgebildete Netzteil NZT an die Netzanschlusssteckdose NASD angeschlossen wird.

In der Ausprägungsvariante 2 ist das Elektrogerät EG ein Haushaltsgerät oder jedes andere nicht batterie- bzw. akkubetriebene Elektrogerät, das zur Stromversorgung direkt an die Netzanschlusssteckdose NASD angeschlossen wird und für die Inbetriebnahme nur noch eingeschaltet werden (Option "B <Einschalten>"), was in der Regel manuell erfolgt. Das direkt am Niederspannungsnetz betriebene Elektrogerät EG ist vorzugsweise ein Fernseher, eine Waschmaschine, eine Geschirrspülmaschine oder ein Elektroherd, es kann aber auch jedes andere direkt am Niederspannungsnetz betriebene Gerät sein.

Um beiden Ausprägungsvarianten 1 und 2 in der FIGUR 1 Geltung zu verschaffen, sind die Batterie BAT einerseits und das Elektrogerät EG mit dem darin angeordneten Netzteil NZT jeweils als gestrichelt gezeichnete Rechtecke dargestellt.

Für die Einschalt- oder Ladesteuerung von energieendverbrauchenden Elektrogeräten enthält die Steuerungsanordnung STGA in der Energieverbrauchsstelle des Energieendverbrauchers EEV einen Modulator MOD, mit dem ein Modulationssignal MDS in das Niederspannungsnetz NSN modulierbar ist. Mit dem Modulationssignal MDS wird zur Identifizierung der Energieverbrauchsstelle des Energieendverbrauchers EEV als Signalinformation eine eindeutig kodierte Verbraucherstellenidentifikationskennung VSIK erzeugt ezg. Die Erzeugung der Verbraucherstellenidentifikationskennung VSIK erfolgt auf der Niederspannungsnetzteilstrecke NSNTS zwischen dem Energieverbrauchszähler EVZ und der Netzanschlussstelle NAS bzw. der Netzanschlusssteckdose NASD. Die Anordnung des Modulators MOD auf dieser Teilstrecke des Niederspannungsnetzes NSN erfolgt vorzugsweise derart, dass der Modulator MOD entweder aus Kostengründen und der Einfachheit halber in dem Energieverbrauchszähler EVZ integriert ist (Option "I") oder aber mit zusätzlichem Installationsaufwand in einem auf der Teilstrecke installierten Zusatzgerät ZG (Option "II") untergebracht ist. Alternativ ist es aber auch möglich, dass der Modulator MOD in der Netzanschlussstelle NAS bzw. der Netzanschlusssteckdose NASD angeordnet sein kann.

Der Modulator MOD ist zudem derart ausgebildet ist, dass das Modulationssignal MDS mit der Verbraucherstellenidentifikationskennung VSIK in regelmäßigen Zeitabständen erzeugbar ist.

Damit das Netzteil NZT in beiden Ausprägungsvarianten 1 und 2 des Endgerätes EG, wenn das Endgerät EG via dem Netzteil NZT über die Netzanschlussstelle NAS bzw. die Netzanschlusssteckdose NASD an das Niederspannungsnetz NSN mit dem dort aufmodulierten Modulationssignal MDS und der Verbraucherstellenidentifikationskennung VSIK angeschlossen wird, die eindeutig kodierte Verbraucherstellenidentifikationskennung VSIK erkennen kann, weist das Netzteil NZT eine hierfür ausgelegte Erkennungseinrichtung EKE auf, die zum Erkennen ekn der eindeutig kodierten Verbraucherstellenidentifikationskennung VSIK entsprechend ausgebildet ist.

Nach dem die Verbraucherstellenidentifikationskennung VSIK von der Erkennungseinrichtung EKE erkannt worden ist, wird diese an eine in dem Elektrogerät EG enthaltene, mit der Erkennungseinrichtung EKE verbundene Steuereinheit STE weitergegeben wtg.

Die Steuereinheit STE enthält für die Einschalt- oder Ladesteuerung ein "Application Programming Interface <API>"-Modul API-M, über das das Elektrogerät EG zur Nutzung eines von einem Serviceanbieter SAB mit einem Serviceanbieter-Server SAB-SV angebotenen Service zur Optimierung der Energiekosten EK des Elektrogeräts EG durch eine logische Kommunikationsverbindung KV_{log} mit dem Serviceanbieter-Server SAB-SV verbindbar ist, bei der das Elektrogerät EG als Client und der Serviceanbieter-Server SAB-SV als Server im Sinne eines Client-Server-Prinzips fungieren.

Die Steuereinheit STE mit dem "Application Programming Interface <API>"-Modul API-M ist derart ausgebildet, dass mit einer durch die Weitergabe der Verbraucherstellenidentifikationskennung VSIK ausgelösten Berechtigungsanfrage für eine Freigabe zum Einschalten EFG oder Freigabe zum Laden LFG des Elektrogeräts EG die Nutzung der Energiekostenoptimierung bei dem Serviceanbieter-Server SAB-SV angefragt afg und die Verbraucherstellenidentifikationskennung VSIK an den Serviceanbieter-Server SAB-SV übergeben übg werden.

Als Reaktion auf die Anfrage antwortet atw der Serviceanbieter-Server SAB-SV des Serviceanbieters SAB über die logische Kommunikationsverbindung KV_{log} und das "Application Programming Interface <API>"-Modul API-M innerhalb eines Zeitfensters, wenn die Energiekostenoptimierung aufgrund eines Energielieferungskontrakts ELK, den der Serviceanbieter SAB mit dem Energieanbieter EAB abgeschlossen hat, gegeben ist, mit der Einschaltfreigabe EFG im Zuge der Ausprägungsvariante 2 des Elektrogeräts EG oder mit der Ladefreigabe LFG im Zuge der Ausprägungsvariante 1 des Elektrogeräts EG. Das Zeitfenster hat vorzugsweise eine Zeitdauer von wenigen Sekunden bis zu ein oder zwei Minuten.

Daraufhin schaltet sich das Elektrogerät EG - im Fall der Ausprägungsvariante 2 des Elektrogeräts EG - zu kontraktbezogenen Energielieferungskonditionen für die Energiekostenoptimierung des Elektrogeräts EG automatisch, z.B. für einen temporären Betrieb des Elektrogeräts EG, ein, während das Elektrogerät EG - im Fall der Ausprägungsvariante 2 des Elektrogeräts EG - zu kontraktbezogenen Energielieferungskonditionen für die Energiekostenoptimierung des Elektrogeräts EG geladen wird. Das automatischen Einschalten bzw. das Laden wird dabei jeweils von der Steuereinheit STE veranlasst.

Das Laden kann z.B. in der Weise stattfinden, dass das Elektrogerät EG, das mit dem als separates Gerät ausgebildeten Netzteil NZT zwar bereits verbunden ist, aber es noch kein Ladestrom fließt, aufgrund der Ladefreigabe LFG den Ladevorgang durch die Steuereinheit STE automatisch startet und durch das Fließen des Ladestroms die Batterie BAT bzw. der Akku des Elektrogeräts EG geladen wird.

Sollte jedoch die Einschaltfreigabe EFG bzw. die Ladefreigabe LFG in dem Zeitfenster unterbleiben, so wird das Elektrogerät EG ohne die besagte Energiekostenoptimierung in herkömmlicher Weise manuell eingeschaltet bzw. in herkömmlicher Weise geladen.

Ist das Elektrogerät EG jedoch eingeschaltet oder wird es geladen, so wird in dem Elektrogerät EG eine mit dem Einschalten in dem temporären Betrieb verbrauchte Energie oder eine für das Laden des Elektrogeräts EG verbrauchte Energie erfasst.

Hierfür ist in der Steuereinheit STE eine Energieverbrauchmesseinrichtung EVME enthalten, wobei die so ausgestaltete Steuereinheit STE derart ausgebildet ist, dass mit der in Bezug auf die übergebene Verbraucherstellenidentifikationskennung VSIK erfolgten Einschaltfreigabe EFG und dem daraufhin geschehenen automatischen Einschalten des Elektrogeräts EG bzw. der Ladefreigabe LFG und dem daraufhin geschehenen Laden des Elektrogeräts EG ein die verbrauchte Energie angebender Energieverbrauch EV des Elektrogeräts EG erfasst und der jeweilige Energieverbrauch EV über das "Application Programming Interface <API>"-Modul API-M und der logischen Kommunikationsverbindung KV_{log} dem Serviceanbieter SAB mitgeteilt werden, wobei dieser den mitgeteilten Energieverbrauch EV dem Energieanbieter EAB weiterleitet, so dass der Energieendverbraucher EEV von dem Energieanbieter EAB für den jeweils mitgeteilten Energieverbrauch EV gemäß der kontraktbezogenen Energiekostenoptimierung durch Erhalt eines Energiekostenrabatts EKR auf die dem Energieendverbraucher EEV berechneten Energiekosten EK rabattiert wird.

FIGUR 2 zeigt eine Steuerungsanordnung STGA zur Einschalt-oder Ladesteuerung von energieendverbrauchenden Elektrogeräten mit einem Elektrofahrzeug EFZ eines Energieendverbrauchers EEV, z.B. der Fahrer des Elektrofahrzeugs, der in einem Niederspannungsnetz NSN eine Energieverbrauchsstelle mit Energieabnahmepunkt bildet.

Das Niederspannungsnetz NSN ist über ein Erdkabel EKB mit einer Trafostation TS eines Hochspannungsnetz HSN verbunden. Das Hochspannungsnetz HSN wird von einem Netzbetreiber NBT betrieben, der seinerseits mit einem Energieanbieter EAB gekoppelt ist. In dem Niederspannungsnetz NSN ist zur Bildung der Energieverbrauchsstelle auf einer Niederspannungsnetzteilstrecke NSNTS ein Energieverbrauchszähler EVZ und eine Netzanschlussstelle NAS angeordnet. Der Energieverbrauchszähler EVZ erfasst die von dem Energieendverbrauchers EEV verbraucht Energie und erzeugt daraus Energieverbrauchswerte EVW, die über den Netzbetreiben NBT dem Energieanbieter EAB in Zuge einer PULL- oder PUSH-Mechanismus zur Verfügung gestellt werden. Aus den zur Verfügung gestellten Energieverbrauchswerte EVW werden von dem Energieanbieter EAB auf der Basis eines Energieversorgungsvertrages zwischen dem Energieanbieter EAB und dem Energieendverbraucher EEV Energiekosten EK für den vom Energieverbrauchszähler EVZ erfassten Energieverbrauch ermittelt und dem Energieendverbraucher EEV mitgeteilt.

Das Elektrofahrzeug EFZ des Energieendverbrauchers ist mit einem Netzteil NZT, das in Elektrofahrzeug EFZ angeordnet ist, zur Stromversorgung an das Niederspannungsnetz NSN über die Netzanschlussstelle NAS anschließbar. Die Netzanschlussstelle NAS ist in diesem Fall z.B. eine Ladestation LST für Elektrofahrzeuge.

Das Elektrofahrzeug EFZ weist bekanntlich eine Ladbatterie LBAT, z.B. in der Form eines Akkus, auf. Zum Laden der Ladebatterie LBAT wird das Elektrofahrzeug EFZ über das Netzteil NZT an die Ladestation LST angeschlossen.

Für die Ladesteuerung von energieendverbrauchenden Elektrofahrzeugen enthält die Steuerungsanordnung STGA in der Energieverbrauchsstelle des Energieendverbrauchers EEV einen Modulator MOD, mit dem ein Modulationssignal MDS in das Niederspannungsnetz NSN modulierbar ist. Mit dem Modulationssignal MDS wird zur Identifizierung der Energieverbrauchsstelle des Energieendverbrauchers EEV als Signalinformation eine eindeutig kodierte Verbraucherstellenidentifikationskennung VSIK erzeugt ezg. Die Erzeugung der Verbraucherstellenidentifikationskennung VSIK erfolgt auf der Niederspannungsnetzteilstrecke NSNTS zwischen dem Energieverbrauchszähler EVZ und der Netzanschlussstelle NAS bzw. der Ladestation LST. Die Anordnung des Modulators MOD auf dieser Teilstrecke des Niederspannungsnetzes NSN erfolgt vorzugsweise derart, dass der Modulator MOD entweder aus Kostengründen und der Einfachheit halber in dem Energieverbrauchszähler EVZ integriert ist (Option "I") oder aber mit zusätzlichem Installationsaufwand in einem auf der Teilstrecke installierten Zusatzgerät ZG (Option "II") untergebracht ist. Alternativ ist es aber auch möglich, dass der Modulator MOD in der Netzanschlussstelle NAS bzw. der Ladestation LST angeordnet sein kann.

Der Modulator MOD ist zudem derart ausgebildet ist, dass das Modulationssignal MDS mit der Verbraucherstellenidentifikationskennung VSIK in regelmäßigen Zeitabständen erzeugbar ist.

Damit das Netzteil NZT, wenn das Elektrofahrzeug EFZ via dem Netzteil NZT über die Netzanschlussstelle NAS bzw. die Ladestation LST an das Niederspannungsnetz NSN mit dem dort aufmodulierten Modulationssignal MDS und der Verbraucherstellenidentifikationskennung VSIK angeschlossen wird, die eindeutig kodierte Verbraucherstellenidentifikationskennung VSIK erkennen kann, weist das Netzteil NZT eine hierfür ausgelegte Erkennungseinrichtung EKE auf, die zum Erkennen ekn der eindeutig kodierten Verbraucherstellenidentifikationskennung VSIK entsprechend ausgebildet ist.

Nach dem die Verbraucherstellenidentifikationskennung VSIK von der Erkennungseinrichtung EKE erkannt worden ist, wird diese an eine in dem Elektrofahrzeug EFZ enthaltene, mit der Erkennungseinrichtung EKE verbundene Steuereinheit STE weitergegeben wtg.

Die Steuereinheit STE enthält für die Einschalt- oder Ladesteuerung ein "Application Programming Interface <API>"-Modul API-M, über das das Elektrofahrzeug EFZ zur Nutzung eines von einem Serviceanbieter SAB mit einem Serviceanbieter-Server SAB-SV angebotenen Service zur Optimierung der Energiekosten EK des Elektrofahrzeugs EFZ durch eine logische Kommunikationsverbindung KV_{log} mit dem Serviceanbieter-Server SAB-SV verbindbar ist, bei der das Elektrofahrzeug EFZ als Client und der Serviceanbieter-Server SAB-SV als Server im Sinne eines Client-Server-Prinzips fungieren.

Die Steuereinheit STE mit dem "Application Programming Interface <API>"-Modul API-M ist derart ausgebildet, dass mit einer durch die Weitergabe der Verbraucherstellenidentifikationskennung VSIK ausgelösten Berechtigungsanfrage für eine Freigabe zum Einschalten EFG oder Freigabe zum Laden LFG des Elektrofahrzeugs EFZ die Nutzung der Energiekostenoptimierung bei dem Serviceanbieter-Server SAB-SV angefragt afg und die Verbraucherstellenidentifikationskennung VSIK an den Serviceanbieter-Server SAB-SV übergeben übg werden.

Als Reaktion auf die Anfrage antwortet atw der Serviceanbieter-Server SAB-SV des Serviceanbieters SAB über die logische Kommunikationsverbindung KV_{log} und das "Application Programming Interface <API>"-Modul API-M innerhalb eines Zeitfensters, wenn die Energiekostenoptimierung aufgrund eines Energielieferungskontrakts ELK, den der Serviceanbieter SAB mit dem Energieanbieter EAB abgeschlossen hat, gegeben ist, mit der Ladefreigabe LFG des Elektrofahrzeugs EFZ. Das Zeitfenster hat vorzugsweise eine Zeitdauer von wenigen Sekunden bis zu ein oder zwei Minuten.

Daraufhin wird das Elektrofahrzeug EFZ zu kontraktbezogenen Energielieferungskonditionen für die Energiekostenoptimierung des Elektrofahrzeugs EFZ geladen wird. Das Laden wird dabei jeweils von der Steuereinheit STE veranlasst.

Das Laden kann z.B. in der Weise stattfinden, dass das Elektrofahrzeug EFZ, das über das Netzteil NZT zwar mit der Ladestation LST bereits verbunden ist, aber noch kein Ladestrom fließt, aufgrund der Ladefreigabe LFG den Ladevorgang durch die Steuereinheit STE automatisch startet und durch das Fließen des Ladestroms die Ladebatterie LBAT bzw. der Akku des Elektrofahrzeugs EFZ geladen wird.

Sollte jedoch die Einschaltfreigabe EFG bzw. die Ladefreigabe LFG in dem Zeitfenster unterbleiben, so wird das Elektrogerät EG ohne die besagte Energiekostenoptimierung in herkömmlicher Weise manuell eingeschaltet bzw. in herkömmlicher Weise geladen.

Wird das Elektrofahrzeug EFZ jedoch geladen, so wird in dem Elektrofahrzeug EFZ eine für das Laden des Elektrogeräts EG verbrauchte Energie erfasst.

Hierfür ist in der Steuereinheit STE eine Energieverbrauchmesseinrichtung EVME enthalten, wobei die so ausgestaltete Steuereinheit STE derart ausgebildet ist, dass mit der in Bezug auf die übergebene Verbraucherstellenidentifikationskennung VSIK erfolgten der Ladefreigabe LFG und dem daraufhin geschehenen Laden des Elektrofahrzeugs EFZ ein die verbrauchte Energie angebender Energieverbrauch EV des Elektrofahrzeugs EFZ erfasst und der jeweilige Energieverbrauch EV über das "Application Programming Interface <API>"-Modul API-M und der logischen Kommunikationsverbindung KV_{log} dem Serviceanbieter SAB mitgeteilt werden, wobei dieser den mitgeteilten Energieverbrauch EV dem Energieanbieter EAB weiterleitet, so dass der Energieendverbraucher EEV von dem Energieanbieter EAB für den jeweils mitgeteilten Energieverbrauch EV gemäß der kontraktbezogenen Energiekostenoptimierung durch Erhalt eines Energiekostenrabatts EKR auf die dem Energieendverbraucher EEV berechneten Energiekosten EK rabattiert wird.

## Patentansprüche

1. Verfahren zur Einschalt- oder Ladesteuerung von energieendverbrauchenden Elektrogeräten und/oder Elektrofahrzeugen, bei dem
- ein Elektrogerät (EG) eines Energieendverbrauchers (EEV) mit einem dem Elektrogerät (EG) zugeordneten oder in dem Elektrogerät (EG) angeordneten Netzteil (NZT) oder ein Elektrofahrzeug (EFZ) eines Energieendverbrauchers (EEV) mit einem in dem Elektrofahrzeug (EFZ) angeordneten Netzteil (NZT) jeweils via dem Netzteil (NZT) an ein Niederspannungsnetz (NSN) mit einem Energieverbrauchszähler (EVZ) über eine Netzanschlussstelle (NAS, NASD, LST) anschließbar ist,
- ein Modulationssignal (MDS) in das Niederspannungsnetz (NSN) modulierbar ist,
mit den Schritten:
a) Erzeugen (ezg) einer eindeutig kodierten Verbraucherstellenidentifikationskennung (VSIK) als Signalinformation des Modulationssignals (MDS) auf einer Niederspannungsnetzteilstrecke (NSNTS) zwischen dem Energieverbrauchszähler (EVZ) und der Netzanschlussstelle (NAS, NASD, LST),
b) Erkennen (ekn) der eindeutigen Kodierung der in dem Modulationssignals (MDS) enthaltenen Verbraucherstellenidentifikationskennung (VSIK) durch das Netzteil (NZT),
c) Weitergeben (wtg) der Verbraucherstellenidentifikationskennung (VSIK) an eine Steuereinheit (STE) des Elektrogeräts (EG) oder des Elektrofahrzeugs (EFZ),
d) Anfragen (afg) der Steuereinheit (STE) mit einer durch die Weitergabe der Verbraucherstellenidentifikationskennung (VSIK) ausgelösten Berechtigungsanfrage für
- entweder eine Freigabe zum Einschalten (EFG) oder Freigabe zum Laden (LFG) des Elektrogeräts (EG)
- oder eine Freigabe zum Laden (LFG) des Elektrofahrzeugs (EFZ) zur Nutzung eines von einem Serviceanbieter (SAB) mit einem Serviceanbieter-Server (SAB-SV) angebotenen Service zur Optimierung von Energiekosten (EK) von Elektrogeräten/Elektrofahrzeugen, wobei der Serviceanbieter-Server (SAB-SV) über ein "Application Programming Interface <API>"-Modul der Steuereinheit (STE) mit dem Elektrogerät (EG) oder dem Elektrofahrzeug (EFZ) als Client durch eine logische Kommunikationsverbindung (KV_{log}) im Sinne eines Client-Server-Prinzips verbindbar ist, und Übergeben (übg) der Verbraucherstellenidentifikationskennung (VSIK) an den Serviceanbieter (SAB) mit dem Serviceanbieter-Server (SAB-SV),
e) automatisches Einschalten bzw. Laden des Elektrogeräts (EG) zu kontraktbezogenen Energielieferungskonditionen für die Energiekostenoptimierung des Elektrogeräts (EG) oder automatisches Laden des Elektrofahrzeugs (EFZ) zu kontraktbezogenen Energielieferungskonditionen für die Energiekostenoptimierung des Elektrofahrzeugs (EFZ), wenn der Serviceanbieter-Server (SAB-SV) des Serviceanbieters (SAB) mit der Einschaltfreigabe (EFG) bzw. der Ladefreigabe (LFG) innerhalb eines Zeitfensters auf die Berechtigungsanfrage mit der übergebenen Verbraucherstellenidentifikationskennung (VSIK) geantwortet hat (atw), weil die Energiekostenoptimierung für die übergebene Verbraucherstellenidentifikationskennung (VSIK) aufgrund eines Energielieferkontrakts (ELK) zwischen dem Serviceanbieter (SAB) und einem Energieanbieter (EAB) gegeben ist, , und anderenfalls, wenn die Einschaltfreigabe (EFG) bzw. die Ladefreigabe (LFG) in dem Zeitfenster unterbleibt, wird das Elektrogerät (EG) ohne die besagte Energiekostenoptimierung in herkömmlicher Weise manuell eingeschaltet bzw. in herkömmlicher Weise geladen, oder das Elektrofahrzeug (EFZ) ohne die besagte Energiekostenoptimierung in herkömmlicher Weise geladen.

2. Verfahren nach Anspruch 1, **dadurch gekennzeichnet, dass**
mit der in Bezug auf die übergebene Verbraucherstellenidentifikationskennung (VSIK) erfolgten Einschaltfreigabe (EFG) und dem daraufhin geschehenen automatischen Einschalten des Elektrogeräts (EG) bzw. der erfolgten Ladefreigabe (LFG) und dem daraufhin geschehenen Laden des Elektrogeräts (EG) oder Elektrofahrzeugs (EFZ)
- ein dazu korrespondierender Energieverbrauch (EV) des Elektrogeräts (EG) bzw. des Elektrofahrzeugs (EFZ) erfasst wird,
- der jeweilige Energieverbrauch (EV) via dem Serviceanbieter (SAB) dem Energieanbieter (EAB) mitgeteilt wird und
ein Energieendverbraucher (EEV) des erfassten Energieverbrauchs (EV) von dem Energieanbieter (EAB) für den jeweils mitgeteilten Energieverbrauch (EV) gemäß der kontraktbezogenen Energiekostenoptimierung durch Erhalt eines Energiekostenrabatts (EKR) rabattiert wird.

3. Verfahren nach Anspruch 1 oder 2, **dadurch gekennzeichnet, dass**
das Modulationssignal (MDS) in regelmäßigen Zeitabständen erzeugt wird.

4. Verfahren nach einem der Ansprüche 1 bis 3, **dadurch gekennzeichnet, dass**
das Elektrogerät (EG) mit dem, dem Elektrogerät (EG) zugeordneten, Netzteil (NZT) ein batteriebetriebenes Gerät (Option "A <Laden>"), insbesondere ein Notebook, ein Tablet oder ein Smartphone etc., ist und das Netzteil (NZT) zum Laden einer Batterie (BAT), z.B. einem Akku, des batteriebetriebenen Gerät als separates Ladegerät benutzt wird, das für das Laden an eine Netzanschlusssteckdose (NASD) als die Netzanschlussstelle (NAS) anschließbar ist (Option "A <Laden>").

5. Verfahren nach einem der Ansprüche 1 bis 3, **dadurch gekennzeichnet, dass**
das Elektrogerät (EG) mit dem in dem Elektrogerät (EG) angeordneten Netzteil (NZT) ein Haushaltsgerät (Option "B <Einschalten>"), insbesondere ein Fernseher, eine Waschmaschine, eine Geschirrspülmaschine oder ein Elektroherd etc., ist und das Haushaltsgerät an eine Netzanschlusssteckdose (NASD) als die Netzanschlussstelle (NAS) anschließbar ist (Option "B <Einschalten>").

6. Verfahren nach einem der Ansprüche 1 bis 3, **dadurch gekennzeichnet, dass**
das Elektrofahrzeug (EFZ) mit dem in dem Elektrofahrzeug (EFZ) angeordneten Netzteil (NZT) ein Elektroauto ist und das Elektroauto über das Netzteil (NZT) zum Laden einer Ladebatterie (LBAT), z.B. ein Lade-Akku, an eine Ladestation (LST) als die Netzanschlussstelle (NAS) anschließbar ist.

7. Verfahren nach einem der Ansprüche 1 bis 6, **dadurch gekennzeichnet, dass**
der Serviceanbieter (SAB) ein Hersteller des Elektrogeräts (EG) bzw. des Elektrofahrzeugs (EFZ) und der Serviceanbieter-Server (SAB-SV) ein Server des Elektrogerätherstellers bzw. Elektrofahrzeugherstellers sind.

8. Steuerungsanordnung (STGA) zur Einschalt- oder Ladesteuerung von energieendverbrauchenden Elektrogeräten und/oder Elektrofahrzeugen mit
a) einem Elektrogerät (EG) oder einem Elektrofahrzeug (EFZ) eines Energieendverbrauchers (EEV)
b) einem Netzteil (NZT), das dem Elektrogerät (EG) zugeordnet oder in dem Elektrogerät (EG) bzw. Elektrofahrzeug (EFZ) angeordnet ist und via dem das Elektrogerät (EG) bzw. das Elektrofahrzeug (EFZ) an ein Niederspannungsnetz (NSN) mit einem Energieverbrauchszähler (EVZ) über eine Netzanschlussstelle (NAS, NASD, LST) anschließbar ist,
c) einem Modulator (MOD) mit dem ein Modulationssignal (MDS) in das Niederspannungsnetz (NSN) modulierbar ist,
wobei
d) der Modulator (MOD) zum Erzeugen (ezg) einer eindeutig kodierten Verbraucherstellenidentifikationskennung (VSIK) als Signalinformation des Modulationssignals (MDS) auf einer Niederspannungsnetzteilstrecke (NSNTS) zwischen dem Energieverbrauchszähler (EVZ) und der Netzanschlussstelle (NAS, NASD, LST) angeordnet ist,
e) eine Erkennungseinrichtung (EKE) in dem Netzteil (NZT) enthalten ist, die die eindeutige Kodierung der in dem Modulationssignal (MDS) enthaltenen Verbraucherstellenidentifikationskennung (VSIK) erkennt (ekn),
f) eine Steuereinheit (STE) in dem Elektrogerät (EG) oder dem Elektrofahrzeug (EFZ) enthalten ist, die mit der Erkennungseinrichtung (EKE) des Netzteils (NZT) verbunden ist und an die die Verbraucherstellenidentifikationskennung (VSIK) von dem Netzteil (NZT) weitergegeben (wtg) wird,
g) ein Serviceanbieter-Server (SAB-SV) eines Serviceanbieters (SAB) enthalten ist, der für die Nutzung eines von dem Serviceanbieter (SAB) angebotenen Service zur Optimierung von Energiekosten (EK) von Elektrogeräten/Elektrofahrzeugen zur Verfügung steht,
h) die Steuereinheit (STE)
- ein "Application Programming Interface <API>"-Modul (API-M) enthält, über die das Elektrogerät (EG) oder das Elektrofahrzeug (EFZ) als Client mit dem Serviceanbieter-Server (SAB-SV) durch eine logische Kommunikationsverbindung (KV_{log}) im Sinne eines Client-Server-Prinzips verbindbar ist, und
- derart ausgebildet ist, dass
**h1**) mit einer durch die Weitergabe der Verbraucherstellenidentifikationskennung (VSIK) ausgelösten Berechtigungsanfrage für
- entweder eine Freigabe zum Einschalten (EFG) oder Freigabe zum Laden (LFG) des Elektrogeräts (EG)
- oder eine Freigabe zum Laden (LFG) des Elektrofahrzeugs (EFZ)
die Nutzung der Energiekostenoptimierung bei dem Serviceanbieter-Server (SAB-SV) angefragt wird (afg) und **h2)** die Verbraucherstellenidentifikationskennung (VSIK) an den Serviceanbieter (SAB) mit dem Serviceanbieter-Server (SAB-SV) übergeben wird (übg),
i) der Serviceanbieter-Server (SAB-SV) und die Steuereinheit (STE) derart ausgebildet sind, dass
das Elektrogerät (EG) zu kontraktbezogenen Energielieferungskonditionen für die Energiekostenoptimierung des Elektrogeräts (EG) automatisch eingeschaltet bzw. geladen wird oder das Elektrofahrzeug (EFZ) zu kontraktbezogenen Energielieferungskonditionen für die Energiekostenoptimierung des Elektrofahrzeugs (EFZ) geladen wird, wenn der Serviceanbieter-Server (SAB-SV) des Serviceanbieters (SAB) mit der Einschaltfreigabe (EFG) bzw. der Ladefreigabe (LFG) innerhalb eines Zeitfensters auf die Berechtigungsanfrage mit der übergebenen Verbraucherstellenidentifikationskennung (VSIK) geantwortet hat (atw), weil die Energiekostenoptimierung für die übergebene Verbraucherstellenidentifikationskennung (VSIK) aufgrund eines Energielieferkontrakts (ELK) zwischen dem Serviceanbieter (SAB) und einem Energieanbieter (EAB) gegeben ist, , und anderenfalls, wenn die Einschaltfreigabe (EFG) bzw. die Ladefreigabe (LFG) in dem Zeitfenster unterbleibt, wird das Elektrogerät (EG) ohne die besagte Energiekostenoptimierung in herkömmlicher Weise manuell eingeschaltet bzw. in herkömmlicher Weise geladen, oder das Elektrofahrzeug (EFZ) ohne die besagte Energiekostenoptimierung in herkömmlicher Weise geladen.

9. Steuerungsanordnung (STGA) nach Anspruch 8, **dadurch gekennzeichnet, dass**
die Steuereinheit (STE) eine Energieverbrauchmesseinrichtung (EVME) enthält und derart ausgebildet ist, dass mit der in Bezug auf die übergebene Verbraucherstellenidentifikationskennung (VSIK) erfolgten Einschaltfreigabe (EFG) und dem daraufhin geschehenen automatischen Einschalten des Elektrogeräts (EG) bzw. der erfolgten Ladefreigabe (LFG) und dem daraufhin geschehenen Laden des Elektrogeräts (EG) oder Elektrofahrzeugs (EFZ) ein dazu jeweils korrespondierender Energieverbrauch (EV) des Elektrogeräts (EG) oder des Elektrofahrzeugs (EFZ) erfasst und der jeweilige Energieverbrauch (EV) via dem Serviceanbieter (SAB) dem Energieanbieter (EAB) mitgeteilt werden, so dass ein Energieendverbraucher (EEV) des erfassten Energieverbrauchs (EV) von dem Energieanbieter (EAB) für den jeweils mitgeteilten Energieverbrauch (EV) gemäß der kontraktbezogenen Energiekostenoptimierung durch Erhalt eines Energiekostenrabatts (EKR) rabattiert wird.

10. Steuerungsanordnung (STGA) nach Anspruch 8 oder 9,
**dadurch gekennzeichnet, dass**
der Modulator (MOD) derart ausgebildet ist, dass das Modulationssignal (MDS) in regelmäßigen Zeitabständen erzeugbar ist.

11. Steuerungsanordnung (STGA) nach einem der Ansprüche 8 bis 10, **dadurch gekennzeichnet, dass**
das Elektrogerät (EG) mit dem, dem Elektrogerät (EG) zugeordneten, Netzteil (NZT) ein batteriebetriebenes Gerät (Option "A <Laden>"), insbesondere ein Notebook, ein Tablet oder ein Smartphone etc., ist und das Netzteil (NZT) zum Laden einer Batterie (BAT), z.B. einem Akku, des batteriebetriebenen Gerät als separates Ladegerät benutzt wird, das für das Laden an eine Netzanschlusssteckdose (NASD) als die Netzanschlussstelle (NAS) anschließbar ist (Option "A <Laden>").

12. Steuerungsanordnung (STGA) nach einem der Ansprüche 8 bis 11, **dadurch gekennzeichnet, dass**
das Elektrogerät (EG) mit dem in dem Elektrogerät (EG) angeordneten Netzteil (NZT) ein Haushaltsgerät (Option "B <Einschalten>"), insbesondere ein Fernseher, eine Waschmaschine, eine Geschirrspülmaschine oder ein Elektroherd etc., ist und das Haushaltsgerät an eine Netzanschlusssteckdose (NASD) als die Netzanschlussstelle (NAS) anschließbar ist (Option "B <Einschalten>").

13. Steuerungsanordnung (STGA) nach einem der Ansprüche 8 bis 11, **dadurch gekennzeichnet, dass**
das Elektrofahrzeug (EFZ) mit dem in dem Elektrofahrzeug (EFZ) angeordneten Netzteil (NZT) ein Elektroauto ist und das Elektroauto über das Netzteil (NZT) zum Laden einer Ladebatterie (LBAT), z.B. ein Lade-Akku, an eine Ladestation (LST) als die Netzanschlussstelle (NAS) anschließbar ist.

14. Steuerungsanordnung (STGA) nach einem der Ansprüche 8 bis 13, **dadurch gekennzeichnet, dass**
der Serviceanbieter (SAB) ein Hersteller des Elektrogeräts (EG) bzw. des Elektrofahrzeugs (EFZ) und der Serviceanbieter-Server (SAB-SV) ein Server des Elektrogerätherstellers bzw. Elektrofahrzeugherstellers sind.

15. Elektrogerät (EG) mit einem Netzteil (NZT), das dem Elektrogerät (EG) zugeordnet oder in dem Elektrogerät (EG) angeordnet ist und wobei
- das Elektrogerät (EG) via des Netzteils (NZT) an ein Niederspannungsnetz (NSN) mit einem Energieverbrauchszähler (EVZ) über eine Netzanschlussstelle (NAS, NASD) anschließbar ist und
- das Netzteil (NZT) ein von einem Modulator (MOD) in dem Niederspannungsnetz (NSN) durch Modulation moduliertes Modulationssignal (MDS) empfängt,
aufweisend
eine Steuereinheit (STE), die
• eine eindeutig kodierte, als Signalinformation des Modulationssignals (MDS) auf einer Niederspannungsnetzteilstrecke (NSNTS) zwischen dem Energieverbrauchszähler (EVZ) und der Netzanschlussstelle (NAS, NASD) erzeugte (ezg) Verbraucherstellenidentifikationskennung (VSIK), die in dem Netzteil (NZT) in Bezug auf die eindeutige Kodierung erkannt wird (ekn) und von dem Netzteil (NZT) weitergegeben wird (wtg), empfängt,
• ein "Application Programming Interface <API>"-Modul (API-M) enthält, über die das Elektrogerät (EG) zur Nutzung eines von einem Serviceanbieter (SAB) mit einem Serviceanbieter-Server (SAB-SV) angebotenen Service zur Optimierung von Energiekosten (EK) von Elektrogeräten als Client durch eine logische Kommunikationsverbindung (KV_{log}) mit dem Serviceanbieter-Server SAB-SV im Sinne eines Client-Server-Prinzips verbindbar ist, und
• derart ausgebildet ist, dass
- mit einer durch die Weitergabe der Verbraucherstellenidentifikationskennung (VSIK) ausgelösten Berechtigungsanfrage für eine Freigabe zum Einschalten (EFG) oder Freigabe zum Laden (LFG) des Elektrogeräts (EG) die Nutzung der Energiekostenoptimierung beim Serviceanbieter (SAB) via dem Serviceanbieter-Server (SAB-SV) angefragt wird (afg),
- die Verbraucherstellenidentifikationskennung (VSIK) an den Serviceanbieter (SAB) mit dem Serviceanbieter-Server (SAB-SV) übergeben wird (übg),
- das Elektrogerät (EG) zu kontraktbezogenen Energielieferungskonditionen für die Energiekostenoptimierung des Elektrogeräts (EG) automatisch eingeschaltet bzw. geladen wird, wenn die mit der übergebenen Verbraucherstellenidentifikationskennung (VSIK) angefragte Einschaltfreigabe (EFG) bzw. Ladefreigabe (LFG) innerhalb eines Zeitfensters als Antwort von dem Serviceanbieter-Server (SAB-SV) des Serviceanbieters (SAB) empfangen wird (atw), weil die Energiekostenoptimierung für die übergebene Verbraucherstellenidentifikationskennung (VSIK) aufgrund eines Energielieferungskontrakts (ELK) zwischen dem Serviceanbieter (SAB) und einem Energieanbieter (EAB) gegeben ist, und anderenfalls, wenn die Steuereinheit (STE) die Einschaltfreigabe (EFG) bzw. die Ladefreigabe (LFG) in dem Zeitfenster nicht empfängt, das Elektrogerät (EG) ohne die besagte Energiekostenoptimierung in herkömmlicher Weise manuell eingeschaltet bzw. in herkömmlicher Weise geladen wird.

16. Elektrogerät (EG) nach Anspruch 15, **dadurch gekennzeichnet, dass**
die Steuereinheit (STE) eine Energieverbrauchmesseinrichtung (EVME) enthält und derart ausgebildet ist, dass mit der in Bezug auf die übergebene Verbraucherstellenidentifikationskennung (VSIK) erfolgten Einschaltfreigabe (EFG) und dem daraufhin geschehenen automatischen Einschalten des Elektrogeräts (EG) bzw. der erfolgten Ladefreigabe (LFG) und dem daraufhin geschehenen Laden des Elektrogeräts (EG) ein dazu jeweils korrespondierender Energieverbrauch (EV) des Elektrogeräts (EG) erfasst und der jeweilige Energieverbrauch (EV) via dem Serviceanbieter (SAB) dem Energieanbieter (EAB) mitgeteilt werden, so dass ein Energieendverbraucher (EEV) des erfassten Energieverbrauchs (EV) von dem Energieanbieter (EAB) für den jeweils mitgeteilten Energieverbrauch (EV) gemäß der kontraktbezogenen Energiekostenoptimierung durch Erhalt eines Energiekostenrabatts (EKR) rabattiert wird.

17. Elektrofahrzeug (EFZ) mit einem Netzteil (NZT), das in dem Elektrofahrzeug (EFZ) angeordnet ist und wobei
- das Elektrofahrzeug (EFZ) via des Netzteils (NZT) an ein Niederspannungsnetz (NSN) mit einem Energieverbrauchszähler (EVZ) über eine Netzanschlussstelle (NAS, LST) anschließbar ist,
- das Netzteil (NZT) ein von einem Modulator (MOD) in dem Niederspannungsnetz (NSN) durch Modulation moduliertes Modulationssignal (MDS) empfängt,
**gekennzeichnet durch**
eine Steuereinheit (STE), die
• eine eindeutig kodierte, als Signalinformation des Modulationssignals (MDS) auf einer Niederspannungsnetzteilstrecke (NSNTS) zwischen dem Energieverbrauchszähler (EVZ) und der Netzanschlussstelle (NAS, LST) erzeugte (ezg) Verbraucherstellenidentifikationskennung (VSIK), die in dem Netzteil (NZT) in Bezug auf die eindeutige Kodierung erkannt wird (ekn) und von dem Netzteil (NZT) weitergegeben wird (wtg), empfängt,
• ein "Application Programming Interface <API>"-Modul (API-M) enthält, über die das Elektrogerät (EG) zur Nutzung eines von einem Serviceanbieter (SAB) mit einem Serviceanbieter-Server (SAB-SV) angebotenen Service zur Optimierung von Energiekosten (EK) von Elektrofahrzeugen als Client durch eine logische Kommunikationsverbindung (KV_{log}) mit dem Serviceanbieter-Server SAB-SV im Sinne eines Client-Server-Prinzips verbindbar ist, und
• derart ausgebildet ist, dass
- mit einer durch die Weitergabe der Verbraucherstellenidentifikationskennung (VSIK) ausgelösten Berechtigungsanfrage für eine Freigabe zum Laden (LFG) des Elektrofahrzeugs (EFZ) die Nutzung der Energiekostenoptimierung bei dem Serviceanbieter-Server (SAB-SV) angefragt wird (afg),
- die Verbraucherstellenidentifikationskennung (VSIK) an den Serviceanbieter-Server (SAB-SV) übergeben wird (übg),
- das Elektrofahrzeug (EFZ) zu kontraktbezogenen Energielieferungskonditionen für die Energiekostenoptimierung des Elektrofahrzeugs (EFZ) geladen wird, wenn die mit der übergebenen Verbraucherstellenidentifikationskennung (VSIK) angefragte Ladefreigabe (LFG) innerhalb eines Zeitfensters als Antwort von dem Serviceanbieter-Server (SAB-SV) des Serviceanbieters (SAB) empfangen wird (atw), weil die Energiekostenoptimierung für die übergebene Verbraucherstellenidentifikationskennung (VSIK) aufgrund eines Energielieferungskontrakts (ELK) zwischen dem Serviceanbieter (SAB) und einem Energieanbieter (EAB) gegeben ist, und anderenfalls, wenn die Steuereinheit (STE) die Ladefreigabe (LFG) in dem Zeitfenster nicht empfängt, das Elektrofahrzeugs (EFZ) ohne die besagte Energiekostenoptimierung in herkömmlicher Weise geladen wird.

18. Elektrofahrzeug (EFZ) nach Anspruch 17, **dadurch gekennzeichnet, dass**
die Steuereinheit (STE) eine Energieverbrauchmesseinrichtung (EVME) enthält und derart ausgebildet ist, dass mit der in Bezug auf die übergebene Verbraucherstellenidentifikationskennung (VSIK) erfolgten Ladefreigabe (LFG) und dem daraufhin geschehenen Laden des Elektrofahrzeugs (EFZ) ein dazu jeweils korrespondierender Energieverbrauch (EV) des Elektrofahrzeugs (EFZ) erfasst und der jeweilige Energieverbrauch (EV) via dem Serviceanbieter (SAB) dem Energieanbieter (EAB) mitgeteilt werden, so dass ein Energieendverbraucher (EEV) des erfassten Energieverbrauchs (EV) von dem Energieanbieter (EAB) für den jeweils mitgeteilten Energieverbrauch (EV) gemäß der kontraktbezogenen Energiekostenoptimierung durch Erhalt eines Energiekostenrabatts (EKR) rabattiert wird.

## Claims

1. Method for switch-on control or charging control of energy end-consuming electric devices and/or electric vehicles, in which
- an electric device (EG) of an energy end consumer (EEV) comprising a power supply unit (NZT) that is associated with the electric device (EG) or is arranged in the electric device (EG), or an electric vehicle (EFZ) of an energy end consumer (EEV) comprising a power supply unit (NZT) that is arranged in the electric vehicle (EFZ), is able to be connected, in each case via the power supply unit (NZT), to a low-voltage grid (NSN) comprising an energy consumption meter (EVZ) by way of a grid connection point (NAS, NASD, LST),
- a modulation signal (MDS) is able to be modulated into the low-voltage grid (NSN),
comprising the steps of:
a) generating (ezg) a uniquely coded consumer point identification identifier (VSIK) as signal information of the modulation signal (MDS) on a low-voltage grid section (NSNTS) between the energy consumption meter (EVZ) and the grid connection point (NAS, NASD, LST),
b) the power supply unit (NZT) detecting (ekn) the unique coding of the consumer point identification identifier (VSIK) contained in the modulation signal (MDS),
c) forwarding (wtg) the consumer point identification identifier (VSIK) to a control unit (STE) of the electric device (EG) or of the electric vehicle (EFZ),
d) the control unit (STE) requesting (afg), by way of an authorization request, triggered by the consumer point identification identifier (VSIK) being forwarded,
- either clearance to switch on (EFG) or clearance to charge (LFG) the electric device (EG)
- or clearance to charge (LFG) the electric vehicle (EFZ) so as to use a service, offered by a service provider (SAB) with a service provider server (SAB-SV), for optimizing energy costs (EK) of electric devices/electric vehicles, said service provider server (SAB-SV) being able to be connected, via an "Application Programming Interface <API>" module of the control unit (STE), to the electric device (EG) or the electric vehicle (EFZ) as a client by way of a logical communication connection (KV_{log}) according to a client-server principle, and transferring (übg) the consumer point identification identifier (VSIK) to the service provider (SAB) by way of the service provider server (SAB-SV),
e) automatically switching on or charging the electric device (EG) under contracted energy supply conditions for the energy cost optimization of the electric device (EG) or automatically charging the electric vehicle (EFZ) under contracted energy supply conditions for the energy cost optimization of the electric vehicle (EFZ) if the service provider server (SAB-SV) of the service provider (SAB) has responded (atw) to the authorization request, by way of the transferred consumer point identification identifier (VSIK), with the switch-on clearance (EFG) or the charging clearance (LFG) within a time window because the energy cost optimization for the transferred consumer point identification identifier (VSIK) is provided on account of an energy supply contract (ELK) between the service provider (SAB) and an energy provider (EAB), and, otherwise, if the switch-on clearance (EFG) or the charging clearance (LFG) is not given in the time window, the electric device (EG) is switched on manually in a conventional manner or charged in a conventional manner without said energy cost optimization, or the electric vehicle (EFZ) is charged in a conventional manner without said energy cost optimization.

2. Method according to Claim 1, **characterized in that** by way of the switch-on clearance (EFG) effected with respect to the transferred consumer point identification identifier (VSIK) and the subsequent automatic switch-on of the electric device (EG), or the effected charging clearance (LFG) and the subsequent charging of the electric device (EG) or electric vehicle (EFZ),
- a corresponding energy consumption (EV) of the electric device (EG) or of the electric vehicle (EFZ) is recorded,
- the respective energy consumption (EV) is communicated via the service provider (SAB) to the energy provider (EAB), and an energy end consumer (EEV) of the recorded energy consumption (EV) is granted a discount by the energy provider (EAB) for the respectively communicated energy consumption (EV) in accordance with the contracted energy cost optimization by receiving an energy cost discount (EKR).

3. Method according to Claim 1 or 2, **characterized in that** the modulation signal (MDS) is generated at regular intervals of time.

4. Method according to any of Claims 1 to 3, **characterized in that**
the electric device (EG) comprising the power supply unit (NZT) that is associated with the electric device (EG) is a battery-operated device (option "A <charge>"), in particular a notebook, a tablet or a smartphone, etc., and the power supply unit (NZT) is used as a separate charging device for charging a battery (BAT), e.g. a rechargeable battery, of the battery-operated device that, for the charging, is able to be connected to a grid connection socket (NASD) as the grid connection point (NAS) (option "A <charge>").

5. Method according to any of Claims 1 to 3, **characterized in that**
the electric device (EG) comprising the power supply unit (NZT) that is arranged in the electric device (EG) is a household appliance (option "B <switch on>"), in particular a television, a washing machine, a dishwasher or an electric oven, etc., and the household appliance is able to be connected to a grid connection socket (NASD) as the grid connection point (NAS) (option "B <switch on>").

6. Method according to any of Claims 1 to 3, **characterized in that**
the electric vehicle (EFZ) comprising the power supply unit (NZT) that is arranged in the electric vehicle (EFZ) is an electric car, and the electric car is able to be connected to a charging station (LST) as the grid connection point (NAS) via the power supply unit (NZT) so as to charge a charging battery (LBAT), for example a charging rechargeable battery.

7. Method according to any of Claims 1 to 6, **characterized in that**
the service provider (SAB) is a manufacturer of the electric device (EG) or of the electric vehicle (EFZ) and the service provider server (SAB-SV) is a server of the electric device manufacturer or electric vehicle manufacturer.

8. Control arrangement (STGA) for switch-on control or charging control of energy end-consuming electric devices and/or electric vehicles, comprising
a) an electric device (EG) or an electric vehicle (EFZ) of an energy end consumer (EEV),
b) a power supply unit (NZT) that is associated with the electric device (EG) or is arranged in the electric device (EG) or electric vehicle (EFZ), and via which the electric device (EG) or the electric vehicle (EFZ) is able to be connected to a low-voltage grid (NSN) comprising an energy consumption meter (EVZ) by way of a grid connection point (NAS, NASD, LST),
c) a modulator (MOD), using which a modulation signal (MDS) is able to be modulated into the low-voltage grid (NSN),
wherein
d) the modulator (MOD) is arranged on a low-voltage grid section (NSNTS) between the energy consumption meter (EVZ) and the grid connection point (NAS, NASD, LST) to generate (ezg) a uniquely coded consumer point identification identifier (VSIK) as signal information of the modulation signal (MDS),
e) a detection apparatus (EKE) that detects (ekn) the unique coding of the consumer point identification identifier (VSIK) contained in the modulation signal (MDS) is contained in the power supply unit (NZT),
f) a control unit (STE) that is connected to the detection apparatus (EKE) of the power supply unit (NZT) and to which the consumer point identification identifier (VSIK) is forwarded (wtg) by the power supply unit (NZT) is contained in the electric device (EG) or the electric vehicle (EFZ),
g) a service provider server (SAB-SV) of a service provider (SAB) that is available for use of a service, offered by the service provider (SAB), for optimizing energy costs (EK) of electric devices/electric vehicles is contained,
h) the control unit (STE)
- contains an "Application Programming Interface <API>" module (API-M), via which the electric device (EG) or the electric vehicle (EFZ) is able to be connected to the service provider server (SAB-SV) as a client by way of a logical communication connection (KV_{log}) according to a client-server principle, and
- is designed in such a way that
h1) the use of the energy cost optimization is requested (afg) at the service provider server (SAB-SV) by way of an authorization request, triggered by the consumer point identification identifier (VSIK) being forwarded, for
- either clearance to switch on (EFG) or clearance to charge (LFG) the electric device (EG)
- or clearance to charge (LFG) the electric vehicle (EFZ) and
h2) the consumer point identification identifier (VSIK) is transferred (übg) to the service provider (SAB) by way of the service provider server (SAB-SV),
i) the service provider server (SAB-SV) and the control unit (STE) are designed in such a way that
the electric device (EG) is automatically switched on or charged under contracted energy supply conditions for the energy cost optimization of the electric device (EG), or the electric vehicle (EFZ) is charged under contracted energy supply conditions for the energy cost optimization of the electric vehicle (EFZ) if the service provider server (SAB-SV) of the service provider (SAB) has responded (atw) to the authorization request, by way of the transferred consumer point identification identifier (VSIK), with the switch-on clearance (EFG) or the charging clearance (LFG) within a time window because the energy cost optimization for the transferred consumer point identification identifier (VSIK) is provided on account of an energy supply contract (ELK) between the service provider (SAB) and an energy provider (EAB), and, otherwise, if the switch-on clearance (EFG) or the charging clearance (LFG) is not given in the time window, the electric device (EG) is switched on manually in a conventional manner or charged in a conventional manner without said energy cost optimization, or the electric vehicle (EFZ) is charged in a conventional manner without said energy cost optimization.

9. Control arrangement (STGA) according to Claim 8, **characterized in that**
the control unit (STE) contains an energy consumption measuring apparatus (EVME) and is designed in such a way that, by way of the switch-on clearance (EFG) effected with respect to the transferred consumer point identification identifier (VSIK) and the subsequent automatic switch-on of the electric device (EG), or the effected charging clearance (LFG) and the subsequent charging of the electric device (EG) or electric vehicle (EFZ), a respectively corresponding energy consumption (EV) of the electric device (EG) or of the electric vehicle (EFZ) is recorded and the respective energy consumption (EV) is communicated via the service provider (SAB) to the energy provider (EAB) such that an energy end consumer (EEV) of the recorded energy consumption (EV) is granted a discount by the energy provider (EAB) for the respectively communicated energy consumption (EV) in accordance with the contracted energy cost optimization by receiving an energy cost discount (EKR).

10. Control arrangement (STGA) according to Claim 8 or 9, **characterized in that**
the modulator (MOD) is designed in such a way that the modulation signal (MDS) is able to be generated at regular intervals of time.

11. Control arrangement (STGA) according to any of Claims 8 to 10, **characterized in that**
the electric device (EG) comprising the power supply unit (NZT) that is associated with the electric device (EG) is a battery-operated device (option "A <charge>"), in particular a notebook, a tablet or a smartphone, etc., and the power supply unit (NZT) is used as a separate charging device for charging a battery (BAT), e.g. a rechargeable battery, of the battery-operated device that, for the charging, is able to be connected to a grid connection socket (NASD) as the grid connection point (NAS) (option "A <charge>").

12. Control arrangement (STGA) according to any of Claims 8 to 11, **characterized in that**
the electric device (EG) comprising the power supply unit (NZT) that is arranged in the electric device (EG) is a household appliance (option "B <switch on>"), in particular a television, a washing machine, a dishwasher or an electric oven, etc., and the household appliance is able to be connected to a grid connection socket (NASD) as the grid connection point (NAS) (option "B <switch on>").

13. Control arrangement (STGA) according to any of Claims 8 to 11, **characterized in that**
the electric vehicle (EFZ) comprising the power supply unit (NZT) that is arranged in the electric vehicle (EFZ) is an electric car, and the electric car is able to be connected to a charging station (LST) as the grid connection point (NAS) via the power supply unit (NZT) so as to charge a charging battery (LBAT), for example a charging rechargeable battery.

14. Control arrangement (STGA) according to any of Claims 8 to 13, **characterized in that**
the service provider (SAB) is a manufacturer of the electric device (EG) or of the electric vehicle (EFZ) and the service provider server (SAB-SV) is a server of the electric device manufacturer or electric vehicle manufacturer.

15. Electric device (EG) comprising a power supply unit (NZT) that is associated with the electric device (EG) or is arranged in the electric device (EG), and wherein
- the electric device (EG) is able to be connected via the power supply unit (NZT) to a low-voltage grid (NSN) comprising an energy consumption meter (EVZ) by way of a grid connection point (NAS, NASD), and
- the power supply unit (NZT) receives a modulation signal (MDS) modulated by a modulator (MOD) in the low-voltage grid (NSN) by way of modulation,
comprising
a control unit (STE), which
• receives a uniquely coded consumer point identification identifier (VSIK) that is generated (ezg) as signal information of the modulation signal (MDS) on a low-voltage grid section (NSNTS) between the energy consumption meter (EVZ) and the grid connection point (NAS, NASD), that is detected (ekn) in the power supply unit (NZT) with respect to the unique coding, and that is forwarded (wtg) by the power supply unit (NZT),
• contains an "Application Programming Interface <API>" module (API-M), via which, for use of a service, offered by a service provider (SAB) with a service provider server (SAB-SV), for optimizing energy costs (EK) of electric devices, the electric device (EG) is able to be connected to the service provider server SAB-SV as a client by way of a logical communication connection (KV_{log}) according to a client-server principle, and
• is designed in such a way that
- the use of the energy cost optimization is requested (afg) at the service provider (SAB) by way of the service provider server (SAB-SV) by way of an authorization request, triggered by the consumer point identification identifier (VSIK) being forwarded, for clearance to switch on (EFG) or clearance to charge (LFG) the electric device (EG),
- the consumer point identification identifier (VSIK) is transferred (übg) to the service provider (SAB) by way of the service provider server (SAB-SV),
- the electric device (EG) is automatically switched on or charged under contracted energy supply conditions for the energy cost optimization of the electric device (EG) if the switch-on clearance (EFG) or charging clearance (LFG) requested by way of the transferred consumer point identification identifier (VSIK) is received (atw) within a time window as a response from the service provider server (SAB-SV) of the service provider (SAB) because the energy cost optimization for the transferred consumer point identification identifier (VSIK) is provided on account of an energy supply contract (ELK) between the service provider (SAB) and an energy provider (EAB), and, otherwise, if the control unit (STE) does not receive the switch-on clearance (EFG) or the charging clearance (LFG) in the time window, the electric device (EG) is switched on manually in a conventional manner or charged in a conventional manner without said energy cost optimization.

16. Electric device (EG) according to Claim 15, **characterized in that**
the control unit (STE) contains an energy consumption measuring apparatus (EVME) and is designed in such a way that, by way of the switch-on clearance (EFG) effected with respect to the transferred consumer point identification identifier (VSIK) and the subsequent automatic switch-on of the electric device (EG), or the effected charging clearance (LFG) and the subsequent charging of the electric device (EG), a respectively corresponding energy consumption (EV) of the electric device (EG) is recorded and the respective energy consumption (EV) is communicated via the service provider (SAB) to the energy provider (EAB) such that an energy end consumer (EEV) of the recorded energy consumption (EV) is granted a discount by the energy provider (EAB) for the respectively communicated energy consumption (EV) in accordance with the contracted energy cost optimization by receiving an energy cost discount (EKR).

17. Electric vehicle (EFZ) comprising a power supply unit (NZT) that is arranged in the electric vehicle (EFZ), and wherein
- the electric vehicle (EFZ) is able to be connected via the power supply unit (NZT) to a low-voltage grid (NSN) comprising an energy consumption meter (EVZ) by way of a grid connection point (NAS, LST),
- the power supply unit (NZT) receives a modulation signal (MDS) modulated by a modulator (MOD) in the low-voltage grid (NSN) by way of modulation,
**characterized by**
a control unit (STE), which
• receives a uniquely coded consumer point identification identifier (VSIK) that is generated (ezg) as signal information of the modulation signal (MDS) on a low-voltage grid section (NSNTS) between the energy consumption meter (EVZ) and the grid connection point (NAS, LST), that is detected (ekn) in the power supply unit (NZT) with respect to the unique coding, and that is forwarded (wtg) by the power supply unit (NZT),
• contains an "Application Programming Interface <API>" module (API-M), via which, for use of a service, offered by a service provider (SAB) with a service provider server (SAB-SV), for optimizing energy costs (EK) of electric vehicles, the electric device (EG) is able to be connected to the service provider server SAB-SV as a client by way of a logical communication connection (KV_{log}) according to a client-server principle, and
• is designed in such a way that
- the use of the energy cost optimization is requested (afg) at the service provider server (SAB-SV) by way of an authorization request, triggered by the consumer point identification identifier (VSIK) being forwarded, for clearance to charge (LFG) the electric vehicle (EFZ),
- the consumer point identification identifier (VSIK) is transferred (übg) to the service provider server (SAB-SV),
- the electric vehicle (EFZ) is charged under contracted energy supply conditions for the energy cost optimization of the electric vehicle (EFZ) if the charging clearance (LFG) requested by way of the transferred consumer point identification identifier (VSIK) is received (atw) within a time window as a response from the service provider server (SAB-SV) of the service provider (SAB) because the energy cost optimization for the transferred consumer point identification identifier (VSIK) is provided on account of an energy supply contract (ELK) between the service provider (SAB) and an energy provider (EAB), and, otherwise, if the control unit (STE) does not receive the charging clearance (LFG) in the time window, the electric vehicle (EFZ) is charged in a conventional manner without said energy cost optimization.

18. Electric vehicle (EFZ) according to Claim 17, **characterized in that**
the control unit (STE) contains an energy consumption measuring apparatus (EVME) and is designed in such a way that, by way of the charging clearance (LFG) effected with respect to the transferred consumer point identification identifier (VSIK) and the subsequent charging of the electric vehicle (EFZ), a respectively corresponding energy consumption (EV) of the electric vehicle (EFZ) is recorded and the respective energy consumption (EV) is communicated via the service provider (SAB) to the energy provider (EAB) such that an energy end consumer (EEV) of the recorded energy consumption (EV) is granted a discount by the energy provider (EAB) for the respectively communicated energy consumption (EV) in accordance with the contracted energy cost optimization by receiving an energy cost discount (EKR).

## Revendications

1. Procédé destiné à la commande d'allumage ou de charge d'appareils électriques consommateurs finaux d'énergie et/ou de véhicules électriques, dans lequel
- un appareil électrique (EG) d'un consommateur final d'énergie (EEV) avec un bloc d'alimentation (NZT) attribué à l'appareil électrique (EG) ou disposé dans l'appareil électrique (EG), ou un véhicule électrique (EFZ) d'un consommateur final d'énergie (EEV) avec un bloc d'alimentation (NZT) disposé dans le véhicule électrique (EFZ), peut être raccordé par le biais du bloc d'alimentation (NZT) à un réseau basse tension (NSN) avec un compteur de consommation d'énergie (EVZ) par l'intermédiaire d'un point de raccordement au réseau (NAS, NASD, LST),
- un signal de modulation (MDS) peut être modulé dans le réseau basse tension (NSN),
comprenant les étapes suivantes :
a) création (ezg) d'un identifiant de point de consommateur (VSIK) codé de manière univoque, servant d'information de signal du signal de modulation (MDS), sur une ligne d'alimentation basse tension (NSNTS) entre le compteur de consommation d'énergie (EVZ) et le point de raccordement au réseau (NAS, NASD, LST),
b) reconnaissance (ekn), par le bloc d'alimentation (NZT), du codage univoque de l'identifiant de point de consommateur (VSIK) contenu dans le signal de modulation (MDS),
c) transmission (wtg) de l'identifiant de point de consommateur (VSIK) à une unité de commande (STE) de l'appareil électrique (EG) ou du véhicule électrique (EFZ),
d) demande (afg) de l'unité de commande (STE) contenant une demande d'autorisation déclenchée par la transmission de l'identifiant de point de consommateur (VSIK) pour
- soit une autorisation d'allumage (EFG), soit une autorisation de charge (LFG) de l'appareil électrique (EG),
- soit une autorisation de charge (LFG) du véhicule électrique (EFZ) en vue de l'utilisation d'un service proposé par un prestataire de services (SAB) par le biais d'un serveur de prestataire de services (SAB-SV) pour l'optimisation des coûts énergétiques (EK) des appareils électriques/véhicules électriques, dans lequel le serveur du prestataire de services (SAB-SV) peut être connecté, par le biais d'un module « Application Programming Interface <API> » de l'unité de commande (STE), à l'appareil électrique (EG) ou au véhicule électrique (EFZ) en tant que client par une liaison de communication logique (KV_{log}) selon un principe client-serveur, et remis (übg) de l'identifiant de point de consommateur (VSIK) au prestataire de services (SAB) par le biais du serveur du prestataire de services (SAB-SV),
e) allumage et/ou charge automatique de l'appareil électrique (EG) selon les conditions de fourniture d'énergie prévues par le contrat, pour l'optimisation des coûts énergétiques de l'appareil électrique (EG), ou charge automatique du véhicule électrique (EFZ) selon les conditions de fourniture d'énergie prévues par le contrat, pour l'optimisation des coûts énergétiques du véhicule électrique (EFZ), lorsque le serveur de prestataire de services (SAB-SV) du prestataire de services (SAB) a répondu (atw) à la demande d'autorisation avec l'identifiant de point de consommateur (VSIK) transmis en accordant l'autorisation d'allumage (EFG) ou l'autorisation de charge (LFG) dans un intervalle de temps, parce que l'optimisation des coûts énergétiques pour l'identifiant de point de consommateur (VSIK) transmis est assurée sur la base d'un contrat de fourniture d'énergie (ELK) entre le prestataire de services (SAB) et un fournisseur d'énergie (EAB), et dans le cas contraire, si l'autorisation d'allumage (EFG) ou l'autorisation de charge (LFG) n'est pas donnée dans l'intervalle de temps, l'appareil électrique (EG) est chargé de manière conventionnelle sans ladite optimisation des coûts énergétiques, ou le véhicule électrique (EFZ) est chargé de manière conventionnelle sans ladite optimisation des coûts énergétiques.

2. Procédé selon la revendication 1, **caractérisé en ce que** lorsque l'autorisation d'allumage (EFG) a été remise en fonction de l'identifiant de point de consommateur (VSIK) transmis, suivie de l'allumage automatique de l'appareil électrique (EG) ou lorsque l'autorisation de charge (LFG) a été remise, suivie de la charge de l'appareil électrique (EG) ou du véhicule électrique (EFZ)
- une consommation d'énergie (EV) correspondante de l'appareil électrique (EG) ou du véhicule électrique (EFZ) est saisie,
- la consommation d'énergie (EV) correspondante est communiquée au fournisseur d'énergie (EAB) via le prestataire de services (SAB) et un consommateur final d'énergie (EEV) bénéficie, de la part du fournisseur d'énergie (EAB), d'un rabais sur la consommation d'énergie (EV) saisi pour la consommation d'énergie (EV) communiquée, conformément à l'optimisation des coûts énergétiques prévue par le contrat, par l'obtention d'un rabais sur les coûts énergétiques (EKR).

3. Procédé selon la revendication 1 ou 2, **caractérisé en ce que**
le signal de modulation (MDS) est généré à intervalles réguliers.

4. Procédé selon l'une des revendications 1 à 3, **caractérisé en ce que**
l'appareil électrique (EG) est, avec le bloc d'alimentation (NZT) attribué à l'appareil électrique (EG), un appareil fonctionnant sur batterie (option « A <charge> »), en particulier un ordinateur portable, une tablette ou un smartphone, etc., et le bloc d'alimentation (NZT) est utilisé pour charger une batterie (BAT), par exemple un accumulateur de charge, de l'appareil fonctionnant sur batterie en tant que chargeur séparé, qui, pour la charge (option « A <charge> »), peut être branché à une prise de courant (NASD) en tant que point de raccordement au réseau (NAS).

5. Procédé selon l'une des revendications 1 à 3, **caractérisé en ce que**
l'appareil électrique (EG) avec le bloc d'alimentation (NZT) attribué à l'appareil électrique (EG), est un appareil ménager (option « B <allumage> »), en particulier un téléviseur, une machine à laver, un lave-vaisselle ou une cuisinière électrique, etc., et l'appareil ménager peut être branché à une prise de courant (NASD) en tant que point de raccordement au réseau (NAS) (option « B <allumage> »).

6. Procédé selon l'une des revendications 1 à 3, **caractérisé en ce que**
le véhicule électrique (EFZ) avec le bloc d'alimentation (NZT) disposé dans le véhicule électrique (EFZ), est une voiture électrique, et la voiture électrique peut être raccordée, par le biais du bloc d'alimentation (NZT), à une station de charge (LST) en tant que point de raccordement au réseau (NAS) pour la charge d'une batterie de recharge, par exemple un accumulateur de charge.

7. Procédé selon l'une des revendications 1 à 6, **caractérisé en ce que**
le prestataire de services (SAB) est un fabricant de l'appareil électrique (EG) et/ou du véhicule électrique (EFZ) et le serveur du prestataire de services (SAB-SV) est un serveur du fabricant de l'appareil électrique ou du fabricant du véhicule électrique.

8. Dispositif de commande (STGA) destiné à la commande d'allumage ou de charge d'appareils électriques consommateurs finaux d'énergie et/ou de véhicules électriques, comprenant
a) un appareil électrique (EG) ou un véhicule électrique (EFZ) d'un consommateur final d'énergie (EEV),
b) un bloc d'alimentation (NZT) attribué à l'appareil électrique (EG) ou disposé dans l'appareil électrique (EG) et/ou dans le véhicule électrique (EFZ) et par le biais duquel l'appareil électrique (EG) et/ou le véhicule électrique (EFZ) peut être raccordé à un réseau basse tension (NSN) avec un compteur de consommation d'énergie (EVZ) par le biais d'un point de raccordement au réseau (NAS, NASD, LST),
c) un modulateur (MOD) avec lequel un signal de modulation (MDS) peut être modulé dans le réseau basse tension (NSN),
dans lequel
d) le modulateur (MOD) est disposé sur une ligne d'alimentation basse tension (NSNTS) entre le compteur de consommation d'énergie (EVZ) et le point de raccordement au réseau (NAS, NASD, LST) afin de générer (ezg) un identifiant de point de consommateur (VSIK) codé de manière univoque en tant qu'information du signal de modulation (MDS),
e) un dispositif de reconnaissance (EKE) est contenu dans le bloc d'alimentation (NZT), lequel reconnaît (ekn) le codage univoque de l'identifiant de point de consommateur (VSIK) contenu dans le signal de modulation (MDS),
f) l'appareil électrique (EG) ou le véhicule électrique (EFZ) contient une unité de commande (STE) qui est reliée au dispositif de reconnaissance (EKE) du bloc d'alimentation (NZT) et à laquelle l'identifiant de point de consommateur (VSIK) est transmis (wtg) par le bloc d'alimentation (NZT),
g) un serveur de prestataire de services (SAB-SV) d'un prestataire de services (SAB) est inclus, lequel est disponible pour l'utilisation d'un service proposé par le prestataire de services (SAB) pour l'optimisation des coûts énergétiques (EK) des appareils électriques/véhicules électriques,
h) l'unité de commande (STE)
- contient un module « Application Programming Interface <API> » (API-M) par l'intermédiaire duquel l'appareil électrique (EG) ou le véhicule électrique (EFZ), en tant que client, peut être relié au serveur du fournisseur de services (SAB-SV) par le biais d'une liaison de communication logique (KV_{log}), selon un principe client-serveur, et
- est conçue de telle sorte que
h1) une demande d'autorisation soit déclenchée par la transmission de l'identifiant de point de consommateur (VSIK) pour
- soit une autorisation d'allumage (EFG), soit une autorisation de charge (LFG) de l'appareil électrique (EG),
- soit une autorisation de charge (LFG) du véhicule électrique (EFZ)
l'utilisation de l'optimisation des coûts énergétiques
- soit demandée (afg) au serveur du prestataire de services (SAB-SV) et
h2) l'identifiant de point de consommateur (VSIK) soit remis (übg) au prestataire de services (SAB) par le biais du serveur du prestataire de services (SAB-SV),
i) le serveur du prestataire de services (SAB-SV) et l'unité de commande (STE) sont conçus de telle sorte que
l'appareil électrique (EG) soit automatiquement allumé et/ou chargé selon les conditions de fourniture d'énergie prévues par le contrat pour l'optimisation des coûts énergétiques de l'appareil électrique (EG), ou que le véhicule électrique (EFZ) soit chargé selon les conditions de fourniture d'énergie prévues par le contrat pour l'optimisation des coûts énergétiques du véhicule électrique (EFZ), lorsque le serveur de prestataire de services (SAB-SV) du prestataire de services (SAB) a répondu (atw) à la demande d'autorisation avec l'autorisation d'allumage (EFG) ou l'autorisation de charge (LFG) dans un intervalle de temps donné, en utilisant l'identifiant de point de consommateur (VSIK) transmis, parce que l'optimisation des coûts énergétiques pour l'identifiant de point de consommateur (VSIK) remis est effective sur la base d'un contrat de fourniture d'énergie (ELK) entre le prestataire de services (SAB) et un fournisseur d'énergie (EAB), et dans le cas contraire, si l'autorisation d'allumage (EFG) et/ou l'autorisation de charge (LFG) n'est pas donnée dans l'intervalle de temps, l'appareil électrique (EG) est allumé manuellement de manière conventionnelle ou chargé de manière conventionnelle sans ladite optimisation des coûts énergétiques, ou le véhicule électrique (EFZ) est chargé de manière conventionnelle sans ladite optimisation des coûts énergétiques.

9. Dispositif de commande (STGA) selon la revendication 8, **caractérisé en ce que**
l'unité de commande (STE) contient un dispositif de mesure de la consommation d'énergie (EVME) et est conçue de telle sorte que, sur la base de l'autorisation d'allumage (EFG) délivrée en fonction de l'identifiant de point de consommateur (VSIK) remis et de l'allumage automatique de l'appareil électrique (EG) qui s'ensuit, ou de l'autorisation de charge (LFG) et de la charge de l'appareil électrique (EG) ou du véhicule électrique (EFZ) qui s'ensuit, une consommation d'énergie (EV) de l'appareil électrique (EG) ou du véhicule électrique (EFZ) soit saisie et que la consommation d'énergie (EV) correspondante soit communiquée au fournisseur d'énergie (EAB) par le biais du prestataire de services (SAB), de sorte qu'un consommateur final d'énergie (EEV) bénéficie, de la part du fournisseur d'énergie (EAB), d'un rabais sur la consommation d'énergie (EV) saisie pour la consommation d'énergie (EV) communiquée, conformément à l'optimisation des coûts énergétiques prévue par le contrat, par le biais d'un rabais sur les coûts énergétiques (EKR).

10. Dispositif de commande (STGA) selon la revendication 8 ou 9, **caractérisé en ce que**
le modulateur (MOD) est conçu de telle sorte que le signal de modulation (MDS) puisse être généré à intervalles réguliers.

11. Dispositif de commande (STGA) selon l'une des revendications 8 à 10, **caractérisé en ce que**
l'appareil électrique (EG) avec le bloc d'alimentation (NZT) attribué à l'appareil électrique (EG) est un appareil fonctionnant sur batterie (option « A <charge> »), en particulier un ordinateur portable, une tablette ou un smartphone, etc., et le bloc d'alimentation (NZT) est utilisé pour charger une batterie (BAT), par exemple un accumulateur de charge, de l'appareil fonctionnant sur batterie en tant que chargeur séparé, qui peut être branché à une prise de courant (NASD) en tant que point de raccordement au réseau (NAS) pour la charge (option « A <charge> »).

12. Dispositif de commande (STGA) selon l'une des revendications 8 à 11, **caractérisé en ce que**
l'appareil électrique (EG) avec le bloc d'alimentation (NZT) attribué à l'appareil électrique (EG) est un appareil ménager (option « B <allumage> »), en particulier un téléviseur, une machine à laver, un lave-vaisselle ou une cuisinière électrique, etc., et l'appareil ménager peut être branché à une prise de courant (NASD) en tant que point de raccordement au réseau (NAS) (option « B <allumage> »).

13. Dispositif de commande (STGA) selon l'une des revendications 8 à 11, **caractérisé en ce que**
le véhicule électrique (EFZ) avec le bloc d'alimentation (NZT) disposé dans le véhicule électrique (EFZ) est une voiture électrique, et la voiture électrique peut être raccordée, par le biais du bloc d'alimentation (NZT), à une station de charge (LST) en tant que point de raccordement au réseau (NAS) pour la charge d'une batterie rechargeable (LBAT), par exemple un accumulateur de charge.

14. Dispositif de commande (STGA) selon l'une des revendications 8 à 13, **caractérisé en ce que**
le prestataire de services (SAB) est un fabricant de l'appareil électrique (EG) et/ou du véhicule électrique (EFZ) et le serveur du prestataire de services (SAB-SV) est un serveur du fabricant de l'appareil électrique et/ou du fabricant du véhicule électrique.

15. Appareil électrique (EG) avec un bloc d'alimentation (NZT) qui est attribué à l'appareil électrique (EG) ou qui est disposé dans l'appareil électrique (EG), et dans lequel
- l'appareil électrique (EG) peut être raccordé, par le biais du bloc d'alimentation (NZT), à un réseau basse tension (NSN) avec un compteur de consommation d'énergie (EVZ) par l'intermédiaire d'un point de raccordement au réseau (NAS, NASD) et
- le bloc d'alimentation (NZT) reçoit d'un modulateur (MOD) un signal de modulation (MDS) modulé par modulation sur le réseau basse tension (NSN),
comprenant
une unité de commande (STE) qui
• reçoit un identifiant de point de consommateur (VSIK) codé (ezg) de manière univoque en tant qu'information de signal du signal de modulation (MDS) sur une ligne d'alimentation basse tension (NSNTS) entre le compteur de consommation d'énergie (EVZ) et le point de raccordement au réseau (NAS, NASD), qui est reconnu (ekn) dans le bloc d'alimentation (NZT) en fonction du codage univoque et qui est transmis (wtg) par le bloc d'alimentation (NZT),
• contient un module « Application Programming Interface <API> » (API-M) par l'intermédiaire duquel l'appareil électrique (EG) accède, en tant que client, au service d'optimisation des coûts énergétiques (EK) des appareils électriques proposé par un fournisseur de services (SAB) par le biais du serveur de fournisseur de services (SAB-SV) pour l'optimisation des coûts énergétiques (EK) des appareils électriques, et
• est conçue de telle sorte que
- une demande d'autorisation déclenchée par la transmission de l'identifiant de point de consommateur (VSIK) pour une autorisation d'allumage (EFG) ou une autorisation de charge (LFG) de l'appareil électrique (EG) soit transmis au prestataire de services (SAB) par le biais du serveur du prestataire de services (SAB-SV) afin de demander (afg) l'utilisation de l'optimisation des coûts énergétiques,
- l'identifiant de point de consommateur (VSIK) soit remis (übg) au prestataire de services (SAB) par le biais du serveur du prestataire de services (SAB-SV),
- l'appareil électrique (EG) soit automatiquement allumé et/ou chargé selon les conditions de fourniture d'énergie prévues par le contrat pour l'optimisation des coûts énergétiques de l'appareil électrique (EG), lorsque l'autorisation d'allumage (EFG) ou l'autorisation de charge (LFG) est reçue (atw) en réponse du serveur de prestataire de services (SAB-SV) du prestataire de services (SAB) dans un intervalle de temps, parce que l'optimisation des coûts énergétiques pour l'identifiant de point de consommateur (VSIK) remis est assurée sur la base d'un contrat de fourniture d'énergie (ELK) entre le prestataire de services (SAB) et un fournisseur d'énergie (EAB), et dans le cas contraire, si l'unité de commande (STE) ne reçoit pas l'autorisation d'allumage (EFG) ou l'autorisation de charge (LFG) dans l'intervalle de temps, l'appareil électrique (EG) est allumé manuellement de manière conventionnelle ou chargé de manière conventionnelle sans ladite optimisation des coûts énergétiques.

16. Appareil électrique (EG) selon la revendication 15, **caractérisé en ce que**
l'unité de commande (STE) contient un dispositif de mesure de la consommation d'énergie (EVME) et est conçue de telle sorte que, après l'autorisation de mise sous tension (EFG) délivrée en fonction de l'identifiant de point de consommateur (VSIK) remis et l'allumage automatique de l'appareil électrique (EG) qui s'ensuit, ou après l'autorisation de charge (LFG) et la charge de l'appareil électrique (EG) qui s'ensuit, une consommation d'énergie (EV) correspondante de l'appareil électrique (EG) soit saisie et que la consommation d'énergie (EV) respective soit communiquée au fournisseur d'énergie (EAB) par le biais du prestataire de services (SAB), de sorte qu'un consommateur final d'énergie (EEV) bénéficie d'un rabais sur la consommation d'énergie (EV) saisie de la part du fournisseur d'énergie (EAB) pour la consommation d'énergie (EV) communiquée, conformément à l'optimisation des coûts énergétiques prévue par le contrat, par l'obtention d'un rabais sur les coûts énergétiques (EKR).

17. Véhicule électrique (EFZ) avec un bloc d'alimentation (NZT) disposé dans le véhicule électrique (EFZ) et dans lequel
- le véhicule électrique (EFZ) peut être raccordé, par le biais du bloc d'alimentation (NZT), à un réseau basse tension (NSN) avec un compteur de consommation d'énergie (EVZ) par l'intermédiaire d'un point de raccordement au réseau (NAS, LST),
- le bloc d'alimentation (NZT) reçoit un signal de modulation (MDS) modulé par un modulateur (MOD) dans le réseau basse tension (NSN),
**caractérisé par**
une unité de commande (STE) qui
• reconnaît un identifiant de point de consommateur (VSIK) codé de manière univoque, généré (ezg) sous forme d'information de signal du signal de modulation (MDS) sur une ligne d'alimentation basse tension (NSNTS) entre le compteur de consommation d'énergie (EVZ) et le point de raccordement au réseau (NAS, LST) et qui est reconnu (ekn) dans le bloc d'alimentation (NZT) en fonction du codage univoque, puis transmis (wtg) par le bloc d'alimentation (NZT),
• contient un module « Application Programming Interface <API> » (API-M), par l'intermédiaire duquel l'appareil électrique (EG) utilise, un service d'optimisation des coûts énergétiques (EK) des véhicules électriques proposé par un fournisseur de services (SAB) par le biais d'un serveur de fournisseur de services (SAB-SV) pour l'optimisation des coûts énergétiques (EK) des véhicules électriques, en tant que client, par le biais d'une liaison de communication logique (KV_{log}) avec le serveur du prestataire de services (SAB-SV), selon le principe client-serveur,
et
• est conçue de telle sorte que
- une demande d'autorisation de charge (LFG) du véhicule électrique (EFZ), déclenchée par la transmission de l'identifiant de point de consommateur (VSIK), entraîne une demande (afg) d'utilisation de l'optimisation des coûts énergétiques auprès du serveur du prestataire de services (SAB-SV),
- l'identifiant de point de consommateur (VSIK) soit remis (übg), au serveur du prestataire de services (SAB-SV)
- le véhicule électrique (EFZ) soit chargé selon les conditions de fourniture d'énergie prévues par le contrat pour l'optimisation des coûts énergétiques du véhicule électrique (EFZ), lorsque l'autorisation de charge (LFG) demandée avec l'identifiant de point de consommateur (VSIK) transmis est reçue (atw) en réponse du serveur du prestataire de services (SAB-SV) du prestataire de services (SAB), parce que l'optimisation des coûts énergétiques pour l'identifiant de point de consommateur (VSIK) remis est assurée sur la base d'un contrat de fourniture d'énergie (ELK) entre le prestataire de services (SAB) et un fournisseur d'énergie (EAB), et dans le cas contraire, si l'unité de commande (STE) ne reçoit pas l'autorisation de charge (LFG) dans l'intervalle de temps, le véhicule électrique (EFZ) est chargé de manière conventionnelle sans ladite optimisation des coûts énergétiques.

18. Véhicule électrique (EFZ) selon la revendication 17, **caractérisé en ce que**
l'unité de commande (STE) contient un dispositif de mesure de la consommation d'énergie (EVME) et est conçue de telle sorte que, à partir de l'autorisation de charge (LFG) délivrée en fonction de l'identifiant de point de consommateur (VSIK) remis et la charge du véhicule électrique (EFZ) qui s'ensuit, une consommation d'énergie (EV) correspondante du véhicule électrique (EFZ) soit saisie et que la consommation d'énergie (EV) respective soit communiquée au fournisseur d'énergie (EAB) par le biais du prestataire de services (SAB), de sorte qu'un consommateur final d'énergie (EEV) bénéficie, pour la consommation d'énergie (EV) saisie, d'un rabais sur les coûts énergétiques (EKR) accordé par le fournisseur d'énergie (EAB) conformément à l'optimisation des coûts énergétiques prévue par le contrat.
